# EUROPÄISCHE PATENTSCHRIFT

(11) **EP 4 490 792 B1**
(45) Veröffentlichungstag und Bekanntmachung des Hinweises auf die Patenterteilung: **06.05.2026**
(21) Anmeldenummer: 23710743.8
(22) Anmeldetag: 10.03.2023
(51) Int. Cl.: H01M 8/1004, B65H 29/00, H01M 8/0273, H01M 8/0286

(54) **VERFAHREN UND VORRICHTUNG ZUR HERSTELLUNG EINER MEMBRAN-ELEKTRODEN-ANORDNUNG**
PROCESS AND APPARATUS FOR MANUFACTURING A MEMBRANE ELECTRODE ASSEMBLY
PROCÉDÉ ET DISPOSITIF POUR FABRIQUER UN ASSEMBLAGE MEMBRANE-ÉLECTRODE

(30) Priorität: 11.03.2022 DE 102022105785
(43) Veröffentlichungstag der Anmeldung: 15.01.2025
(73) Patentinhaber: MB Automation GmbH & Co. KG, 93426 Roding (DE)
(72) Erfinder: HOCHMANN, Sven, 01259 Dresden (DE)
(74) Vertreter: Schmidt, Steffen J.
(86) Internationale Anmeldenummer: PCT/EP2023/056099
(87) Internationale Veröffentlichungsnummer: WO 2023/170248

(56) Entgegenhaltungen:
- DE-A1- 102022 103 757
- US-A1- 2008 142 152
- US-A1- 2011 151 350
- US-A1- 2019 245 231

## Beschreibung

### Hintergrund

Hier werden ein Verfahren und eine Vorrichtung zur Herstellung einer Membran-Elektroden-Anordnung, zum Beispiel einer Membran-Elektroden-Anordnung für eine Brennstoffzelle, beschrieben. Details hierzu sind in den Ansprüchen definiert; aber auch die Beschreibung enthält relevante Angaben zur Struktur und zur Funktionsweise sowie zu Varianten.

### Stand der Technik

Ein bekanntes Verfahren zur Herstellung einer Membran-Elektroden-Anordnung für eine Brennstoffzelle ist das sogenannte Pick-and-Place-Verfahren. Hierbei kommen Handhabungsmaschinen, Roboter oder auf Schienen angeordnete Greifer zum Einsatz, welche Bewegungen in unterschiedlichen Raumrichtungen ausführen können, um die unterschiedlichen Komponenten der jeweiligen Membran-Elektroden-Anordnung mit der erforderlichen Genauigkeit zu platzieren. Ein solches Pick-and-Place-Verfahren zum Herstellen von Membran-Elektroden-Anordnungen und Brennstoffzellen in der Großserie ist im Hinblick auf die Materialkosten und auch aufgrund der erforderlichen Handhabung der filigranen und empfindlichen Komponenten anspruchsvoll.

Weiter ist bekannt, einen Träger für eine Membran und/oder eine Elektrode als Teil einer durchgängigen Materialbahn bereitzustellen. Alternativ kann auch eine Membran und/oder eine Elektrode als Materialbahn bereitgestellt werden. Die Materialbahn kann hierbei eine Mehrzahl von Bearbeitungsstationen durchlaufen, wobei zumindest eine zweite Komponente der Membran-Elektroden-Anordnung mit der Materialbahn verbunden wird. Ein solches Verfahren offenbart zum Beispiel die DE 10 2015 010 440 A1.

Weiter offenbart auch das Dokument DE 10 2015 214 361 A1 ein Verfahren, bei dem Komponenten einer Membran-Elektroden-Anordnung als durchgängige Materialbahnen bereitgestellt werden können. Die Komponenten der Membran-Elektroden-Anordnung durchlaufen während der Fertigung der Membran-Elektroden-Anordnung mehrere Fertigungsstationen und werden hierbei jeweils zwischen verschiedenen Transportvorrichtungen ausgetauscht.

Weitere Membran-Elektroden-Anordnungen sowie zugehörige Fertigungsverfahren sind aus den Dokumenten US 2011/151350 A1,

DE 10 2010 049 548 A1, DE 10 2010 054 199 A1und DE 10 2011 105 180 A1 bekannt.

Soll eine Membran-Elektroden-Anordnung für eine Brennstoffzelle hergestellt werden, die zumindest zwei mit Ausnehmungen versehene Träger und eine zwischen den Trägern angeordnete Membran aufweisen soll, ist es notwendig, die Träger mit den Ausnehmungen jeweils passgenau übereinander anzuordnen. Werden die Träger als fortlaufende Materialbahn bereitgestellt und gefördert, besteht das Problem, dass die zwischen den Trägern anzuordnende Membran die Ausnehmungen in den jeweiligen Trägern zumindest teilweise abdeckt. Dies erschwert die passgenaue Anordnung der Träger übereinander, da die als Materialbahn bereitgestellten und miteinander verbundenen Träger keine Schnittkanten in der Förderrichtung aufweisen, welche als Referenzen für die Positionierung der Träger dienen könnten. Gleichzeitig kann bereits ein geringer Schlupf bei der Förderung der übereinander anzuordnenden Träger dazu führen, dass ein Positionierungsfehler der als Bahnmaterial bereitgestellten Träger im Verlauf eines Fertigungsprozesses stetig zunimmt, sodass jede vorgegebene Fertigungstoleranz für die Membran-Elektroden-Anordnung im Verlauf eines Fertigungsprozesses irgendwann verletzt wird.

### Zu lösende Aufgabe

Es besteht somit ein Bedarf an einem verbesserten Fertigungsverfahren und einer verbesserten Herstellungsvorrichtung zur Herstellung einer Membran-Elektroden-Anordnung, die insbesondere eine Präzision der Übereinanderanordnung von zwei jeweils als quasi-unendliches Bahnmaterial bereitgestellten Trägerrahmen verbessert.

### Lösung

Diese Aufgabe wird durch eine Vorrichtung nach dem unabhängigen Vorrichtungsanspruch 1 sowie durch ein Verfahren nach dem unabhängigen Verfahrensanspruch 13 gelöst. Ausgestaltungen dieser Lösung werden durch die abhängigen Ansprüche definiert.

Eine Vorrichtung zur Herstellung einer Membran-Elektroden-Anordnung, MEA, umfasst eine erste Transportvorrichtung, die dazu eingerichtet ist, zumindest einen ersten Trägerrahmen mit einer ersten Fördergeschwindigkeit zu fördern. Eine erste Anordnungsvorrichtung, zum Beispiel in Form einer Vakuumtrommel, ist dazu eingerichtet, zumindest eine Membran auf dem zumindest einen Trägerrahmen anzuordnen, während dieser durch die erste Transportvorrichtung gefördert wird. Eine zweite Anordnungsvorrichtung, zum Beispiel in Form einer Vakuumtrommel, ist dazu eingerichtet, zumindest einen zweiten Trägerrahmen auf der Membran anzuordnen, während diese gemeinsam mit dem ersten Trägerrahmen durch die erste Transportvorrichtung gefördert wird.

Die Trägerrahmen, insbesondere der erste Trägerrahmen und/oder der zweite Trägerrahmen, werden in einer Variante jeweils als quasi-unendliches und/oder fortlaufendes Bahnmaterial bereitgestellt, zum Beispiel von einer Trägerbahnrolle. Bei einem quasi-unendlichen und/oder fortlaufenden Bahnmaterial sind mehrere, insbesondere gleichartige, Trägerrahmen miteinander verbunden und/oder (noch) nicht voneinander getrennt. Mit anderen Worten bilden als Bahnmaterial bereitgestellte Trägerrahmen eine einstückig ausgebildete Folge von mehreren Trägerrahmen aus, die zu einem späteren Zeitpunkt voneinander getrennt oder vereinzelt werden können, zum Beispiel mit einer Schneidvorrichtung. Die Trägerrahmen, insbesondere der erste und/oder der zweite Trägerrahmen, werden in einer Variante jeweils mit oder ohne Ausnehmungen, insbesondere mit einer ersten Ausnehmung oder ohne eine erste Ausnehmung, bereitgestellt.

In einer Variante können die Trägerrahmen, insbesondere der erste Trägerrahmen und/oder der zweite Trägerrahmen, als fortlaufendes Bahnmaterial gemeinsam mit einer, zum Beispiel gas- oder luftdurchlässigen, Trägerschicht bereitgestellt werden, zum Beispiel durch die Trägerbahnrolle. Die Trägerrahmen können hierbei insbesondere mit einem durch Wärme aktivierbaren/lösbaren und/oder mit einem temperaturabhängig verflüssigbaren Klebstoffauftrag an/auf der Trägerschicht angeordnet und/oder fixiert sein. Der Klebstoffauftrag kann insbesondere ein vollflächiger Klebstoffauftrag sein. Während der Förderung auftretende Spannkräfte und/oder durch die Förderung verursachte Spannkräfte können durch die Trägerschicht aufgenommen oder kompensiert werden. Auf die Trägerrahmen selbst wirken so während der Förderung keine oder kaum (Zug- oder Spann-)Kräfte, insbesondere keine oder kaum (Zug- oder Spann-)Kräfte in der Förderrichtung der Trägerrahmen und der Trägerschicht. Einer Beschädigung der Trägerrahmen kann so entgegengewirkt werden.

Die Schneidvorrichtung umfasst in einer Variante insbesondere einen Schneidzylinder. Ein Schneidzylinder ist insbesondere eine Schneidwalze oder eine sonstige rotierende Schneidvorrichtung, die dazu geeignet ist, eine als fortlaufendes Bahnmaterial bereitgestellte MEA-Komponente, zum Beispiel die als Bahnmaterial bereitgestellten Trägerrahmen, in mehrere MEA-Komponentenabschnitte, insbesondere in mehrere vereinzelte oder voneinander getrennte Trägerrahmen, zu zerschneiden oder zu zertrennen. Jedoch können in anderen Varianten auch andere Trenn- oder Schneidvorrichtungen zum Zertrennen oder zum Separieren einer als fortlaufendes Bahnmaterial bereitgestellten MEA-Komponente in mehrere MEA-Komponentenabschnitte verwendet werden, ausdrücklich auch solche, die keine rotierenden (Schneid-)Elemente aufweisen.

In einer Variante kann die Schneidvorrichtung dazu eingerichtet sein, eine als fortlaufendes Bahnmaterial bereitgestellte MEA-Komponente, zum Beispiel die als Bahnmaterial bereitgestellten Trägerrahmen, in mehrere MEA-Komponentenabschnitte, insbesondere in mehrere vereinzelte oder voneinander getrennte Trägerrahmen, zu zerschneiden oder zu zertrennen, während die erste MEA Komponente auf einer Trägerschicht angeordnet ist.

Ein Vorteil der Verwendung von Vakuumtrommeln ist, dass diese die als Bahnmaterial bereitgestellten Membranen sowie die als Bahnmaterial bereitgestellten Trägerrahmen schlupffrei fördern können, was eine Präzision der Anordnung der Membran sowie der Trägerrahmen verbessert. Optional können eine oder mehrere Vakuumtrommeln, zum Beispiel die zweite Anordnungsvorrichtung, auch dazu eingerichtet sein, den zumindest einen ersten Trägerrahmen und/oder den zumindest einen zweiten Trägerrahmen, insbesondere schlupffrei, zu fördern, während diese/r auf einer Trägerschicht angeordnet ist/sind.

Eine Vakuumtrommel ist eine Fördertrommel oder ein Förderzylinder, der dazu geeignet ist, eine Materialbahn, zum Beispiel als quasi-unendliches Bahnmaterial bereitgestellte Trägerrahmen für eine Membran-Elektroden-Anordnung und/oder eine Membran oder Membranabschnitte für eine Membran-Elektroden-Anordnung und/oder weitere Komponenten für eine Membran-Elektroden-Anordnung oder einen oder mehrere vereinzelte MEA-Komponentenabschnitte, insbesondere schlupffrei, zu fördern. Dabei ist die Vakuumtrommel dazu eingerichtet, die Materialbahn oder die Materialbahnabschnitte mittels eines Unterdrucks an einer Trommel- oder Zylindermantelfläche zu fixieren. Der Unterdruck kann zum Beispiel mittels Öffnungen in der Trommel- oder Zylindermantelfläche oder mittels einer zumindest abschnittsweise flächig porösen Zylindermantelfläche auf die MEA-Komponente und/oder die MEA-Komponentenabschnitte wirken und diese an der Trommel- oder Zylindermantelfläche fixieren. Eine Vakuumtrommel wird auch Unterdrucktrommel genannt.

Die Öffnungen in der Trommel- oder Zylindermantelfläche und/oder der durch diese Öffnungen wirkende Unterdruck können durch eine Steuerung selektiv aktiviert oder deaktiviert werden und/oder abhängig von einer Drehung der Vakuumtrommel und/oder abhängig von vorbestimmten Zeitintervallen gesteuert oder geregelt werden.

Optional kann das Ablösen der MEA-Komponente und/oder der MEA-Komponentenabschnitte das Aufheben des Unterdrucks und/oder eine kurzzeitige Umkehr von Unterdruck in Überdruck umfassen. Mit anderen Worten kann durch das Aufheben oder kontrollierte Kompensieren eines auf die MEA-Komponente und/oder die MEA-Komponentenabschnitte wirkenden Unterdrucks eine Fixierung der MEA-Komponente und/oder des MEA-Komponentenabschnitts an der Trommel- oder Zylindermantelfläche der Vakuumtrommel aufgehoben werden. Weiter kann die Vakuumtrommel dazu angeordnet und ausgebildet sein, eine MEA-Komponente und/oder einen MEA-Komponentenabschnitt während des Anordnens auf einer anderen MEA-Komponente, zum Beispiel auf einer Trägerbahn, an diese andere MEA-Komponente anzupressen oder aufzuwalzen.

Weiter kann die Vorrichtung zur Herstellung einer Membran-Elektroden-Anordnung eine oder mehrere Klebstoffapplikationsvorrichtungen aufweisen, zum Beispiel eine oder mehrere Klebstoffapplikationsvorrichtungen in Form eines Rotationssiebdruckers, der dazu eingerichtet ist, einen Klebstoff auf eine der MEA-Komponenten aufzudrucken. Zum Beispiel kann die Vorrichtung zur Herstellung einer Membran-Elektroden-Anordnung eine Klebstoffapplikationsvorrichtung aufweisen, die dazu eingerichtet ist, einen Klebstoffauftrag auf den zumindest einen ersten Trägerrahmen aufzutragen. Alternativ oder ergänzend kann die Vorrichtung zur Herstellung einer Membran-Elektroden-Anordnung auch eine Klebstoffapplikationsvorrichtung aufweisen, die dazu eingerichtet ist, einen Klebstoffauftrag auf den zumindest einen zweiten Trägerrahmen und/oder auf die Membran aufzutragen. Der Klebstoffauftrag, der auf den ersten und/oder zweiten Trägerrahmen und/oder auf die Membran aufgetragen wird, kann hierbei zum Beispiel ein vollflächiger Klebstoffauftrag oder ein Klebstoffauftrag in Form eines Klebstoffrahmens sein. Der Klebstoffrahmen kann insbesondere zumindest eine erste Ausnehmung in dem ersten Trägerrahmen oder in dem zweiten Trägerrahmen vollständig umgeben oder umformen.

Das Anordnen der Membran und/oder des zumindest einen zweiten Trägerrahmens auf dem zumindest einen ersten Trägerrahmen kann ein stoffschlüssiges thermisches Fügeverfahren, insbesondere ein Laminationsverfahren umfassen. Alternativ kann das Anordnen der Membran und/oder des zumindest einen zweiten Trägerrahmens auf dem zumindest einen ersten Trägerrahmen ein Kaltlaminationsverfahren, welches die zweite MEA-Komponente oder den MEA-Komponentenabschnitt auf der ersten MEA-Komponente fixiert, umfassen.

Optional kann hierfür eine separate Laminationsvorrichtung und/oder eine separate Erwärmungsvorrichtung und/oder eine separate Aushärtevorrichtung vorgesehen sein. Auch eine, insbesondere separate, Anpressvorrichtung, die dazu ausgebildet und angeordnet ist, die MEA-Komponenten, zum Beispiel den ersten und/oder den zweiten Trägerrahmen und/oder die Membran, und/oder MEA-Komponentenabschnitte aneinander anzupressen, kann vorgesehen sein. Alternativ oder ergänzend kann die Membran und der zumindest eine zweite Trägerrahmen auch mit/durch die Vakuumtrommeln der jeweiligen Anordnungsvorrichtungen an den ersten Trägerrahmen angepresst oder angewalzt werden.

Die erste und/oder die zweite Anordnungsvorrichtung können dazu eingerichtet sein, die Membran und/oder den zumindest einen zweiten Trägerrahmen kontinuierlich zu fördern. Weiter können die erste und/oder die zweite Anordnungsvorrichtung, alternativ oder ergänzend, dazu eingerichtet sein, die Membran und/oder den zweiten Trägerrahmen zumindest teilweise oder abschnittsweise entlang einer Kreisbahn oder entlang eines Kreisbahnabschnitts zu fördern. Die Kreisbahn und/oder der Kreisbahnabschnitt kann zum Beispiel im Wesentlichen durch eine Mantelfläche der Vakuumtrommel der jeweiligen Anordnungsvorrichtung definiert oder vorgegeben sein. Die Vakuumtrommeln der ersten und/oder der zweiten Anordnungsvorrichtung können dazu eingerichtet sein, um eine erste Rotationsachse rotiert oder gedreht zu werden, sodass eine auf der Mantelfläche der jeweiligen Vakuumtrommel mittels eines Unterdrucks fixierte MEA-Komponente, zum Beispiel eine Membran oder ein Trägerrahmen, entlang einer Kreisbahn oder eines Kreisbahnabschnitts bewegt wird.

Die zweite Anordnungsvorrichtung kann insbesondere eine beheizbare oder erwärmbare Vakuumtrommel sein, die dazu eingerichtet ist, einen vollflächigen und/oder temperaturabhängig verflüssigbaren/lösbaren Klebstoffauftrag, mit dem der zumindest eine zweite Trägerrahmen auf einer, insbesondere zweiten, Trägerschicht angeordnet/fixiert ist, zu verflüssigen und/oder durch Wärmeeinfluss zu lösen, sodass der zweite Trägerrahmen von der Trägerschicht und/oder von der zweiten Anordnungsvorrichtung abgelöst und/oder freigegeben werden kann.

Die erste Anordnungsvorrichtung kann zu einem Zusammenwirken mit einer Schneidvorrichtung ausgebildet sein, welche dazu eingerichtet ist, eine als fortlaufendes Bahnmaterial bereitgestellte Membran in mehrere MEA-Komponentenabschnitte, nämlich mehrere Membranabschnitte, zu zerschneiden oder zu vereinzeln, während die Membran durch die erste Anordnungsvorrichtung gefördert oder bewegt wird.

Die Schneidvorrichtung für die Membran kann insbesondere einen Schneidzylinder umfassen. Ein Schneidzylinder kann insbesondere eine Schneidwalze oder eine sonstige rotierende Schneidvorrichtung sein, die dazu geeignet ist, eine als fortlaufendes Bahnmaterial bereitgestellte MEA-Komponente, zum Beispiel die als Bahnmaterial bereitgestellte Membran, in mehrere MEA-Komponentenabschnitte, zum Beispiel in mehrere vereinzelte oder voneinander getrennte Membranabschnitte, zu zerschneiden oder zu zertrennen. Jedoch können in anderen Varianten auch andere Trenn- oder Schneidvorrichtungen zum Zertrennen oder zum Separieren einer als fortlaufendes Bahnmaterial bereitgestellten MEA-Komponente in mehrere MEA-Komponentenabschnitte verwendet werden, ausdrücklich auch solche, die keine rotierenden (Schneid-)Elemente aufweisen.

Weiter kann die Vakuumtrommel der ersten Anordnungsvorrichtung eine Gummi- oder Kunststoffbeschichtung auf ihrer Mantelfläche oder Manteloberfläche aufweisen und/oder zumindest teilweise aus einem Gummi- oder Kunststoffmaterial gefertigt sein. Ein Vorteil der Gummi- oder Kunststoffbeschichtung ist, dass die Klingen des Schneidzylinders und/oder einer, insbesondere ersten, Rotationsstanze vor einer Beschädigung aufgrund eines unmittelbaren Kontakts mit der Mantelfläche oder Manteloberfläche der Vakuumtrommel der ersten Anordnungsvorrichtung geschützt werden können. Auch die erste Anordnungsvorrichtung kann so vor einer Beschädigung durch den Schneidzylinder und/oder einer Rotationsstanze geschützt werden. Die Gummi- oder Kunststoffbeschichtung kann in einer Variante auf einen Teil der Mantelfläche oder der Manteloberfläche begrenzt sein, welcher mit Klingen des Schneidzylinders und/oder einer Rotationsstanze in Kontakt gerät.

Alternativ kann die Vakuumtrommel der ersten Anordnungsvorrichtung eine haftungsreduzierende Beschichtung, insbesondere eine PTFE- (Teflon^{®})-Beschichtung, aufweisen. Ein Vorteil hierbei ist, dass die zweite Membran mit der/durch die Vakuumtrommel der ersten Anordnungsvorrichtung mit der haftungsreduzierenden Beschichtung an den zumindest einen ersten Trägerrahmen, angepresst oder angewalzt werden kann. Aufgrund der haftungsreduzierenden Beschichtung lassen sich die Membran oder die Membranabschnitte besonders gut von der Vakuumtrommel ablösen und eine Fehlpositionierung der Membran oder Membranabschnitte aufgrund eines Anhaftens oder unregelmäßigen Ablösens der Membran oder der Membranabschnitte von der Vakuumtrommel der ersten Anordnungsvorrichtung kann vermieden werden. Hierdurch können sowohl eine Fertigungspräzision als auch eine Fertigungsgeschwindigkeit verbessert werden.

In einer Variante weist die Vakuumtrommel der ersten Anordnungsvorrichtung sowohl eine Gummi- oder Kunststoffbeschichtung als auch eine haftungsreduzierende Beschichtung auf ihrer Mantelfläche oder Manteloberfläche auf. Die unterschiedlichen Beschichtungen können hierbei auf unterschiedlichen Abschnitten oder Teilflächen der Mantelfläche oder Manteloberfläche angeordnet sein.

Die erste Transportvorrichtung kann zum Beispiel ein, insbesondere umlaufendes, erstes Vakuumtransportband sein. Weiter kann die erste Transportvorrichtung dazu eingerichtet sein, den zumindest einen ersten Trägerrahmen kontinuierlich oder taktweise mit der ersten Fördergeschwindigkeit zu fördern. Die erste Transportvorrichtung kann zudem dazu eingerichtet sein, den zumindest einen ersten Trägerrahmen in Form eines Bahnmaterials oder in Form mehrerer MEA-Komponentenabschnitte der ersten MEA-Komponente zu fördern und/oder während des Förderns mittels eines Unterdrucks zu fixieren/halten. Die erste Transportvorrichtung kann den zumindest einen ersten Trägerrahmen insbesondere spannungsfrei fördern. Spannungsfrei heißt, dass während des Förderns eines Bahnmaterials keine (Zug-)Kraft in der Förderrichtung auf das Bahnmaterial ausgeübt wird. Mit anderen Worten bedeutet spannungsfrei, dass die als Bahnmaterial bereitgestellten Trägerrahmen keine oder kaum eine durch die Förderung bedingte Materialspannung in einer Richtung parallel zur Förderrichtung aufweisen.

In einer Variante kann die erste Transportvorrichtung dazu eingerichtet sein, den zumindest einen ersten Trägerrahmen in Form eines Bahnmaterials oder in Form mehrerer MEA-Komponentenabschnitte der ersten MEA-Komponente zu fördern, während diese/r auf einer Trägerschicht angeordnet ist.

Optional kann das erste Vakuumtransportband dazu eingerichtet sein, den zumindest einen ersten Trägerrahmen gemeinsam mit einer ersten MEA-Komponente zu fördern, wobei der zumindest erste Trägerrahmen auf der ersten MEA-Komponente angeordnet ist.

Ein Vorteil hierbei ist, dass der erste Trägerrahmen bereits auf einer ersten MEA-Komponente und/oder auf Abschnitten der ersten MEA-Komponente, zum Beispiel auf einer Gasdiffusionsschicht, GDL, angeordnet sein kann. Die Fertigung einer Membran-Elektroden-Anordnung mit zwei Trägerrahmen kann hierdurch weiter erleichtert und beschleunigt werden.

Weiter kann die Vorrichtung zur Herstellung einer Membran-Elektroden-Anordnung eine dritte Anordnungsvorrichtung, insbesondere eine dritte Anordnungsvorrichtung in Form einer Vakuumtrommel, aufweisen, die dazu eingerichtet ist, den zumindest einen ersten Trägerrahmen auf der durch das erste Vakuumtransportband gefördertem MEA-Komponente anzuordnen, sodass das erste Vakuumtransportband den zumindest einen ersten Trägerrahmen gemeinsam mit einer ersten MEA-Komponente fördern kann.

Ein Vorteil hierbei ist, dass der erste Trägerrahmen auf einer als quasi-unendliches Bahnmaterial bereitgestellten ersten MEA-Komponente, zum Beispiel auf einer GDL, und/oder auf separierten Abschnitten der ersten MEA-Komponente angeordnet werden kann, sodass die weitere Fertigung der Membran-Elektroden-Anordnung mit zwei Trägerrahmen bereits mit einem Trägerrahmen, der auf einer ersten MEA-Komponente oder Abschnitten einer ersten MEA-Komponente angeordnet ist, fortgesetzt werden kann.

In einer weiteren Variante kann die erste Transportvorrichtung selbst als Vakuumtrommel ausgebildet sein. Die erste Transportvorrichtung kann auch in diesem Fall dazu eingerichtet sein, den ersten Trägerrahmen kontinuierlich mit einer ersten Fördergeschwindigkeit zu fördern. Ferner kann die erste Transportvorrichtung auch in diesem Fall dazu eingerichtet sein, den zumindest einen ersten Trägerrahmen zu fördern, während dieser auf einer Trägerschicht angeordnet ist.

Ein Vorteil hierbei ist, dass eine Vakuumtrommel den oder die als fortlaufendes Bahnmaterial bereitgestellten ersten Trägerrahmen mit noch höherer Präzision fördern kann als ein Vakuumtransportband. Weiter tritt, wenn der erste Trägerrahmen selbst durch eine Vakuumtrommel gefördert wird, bei der Anordnung der Membran und/oder des zweiten Trägerrahmens auf den ersten Trägerrahmen keine oder nur eine verminderte Materialspannung oder Materialdehnung innerhalb der Membran und/oder des zweiten Trägerrahmens auf, da diese nicht von einer gekrümmten Mantelfläche einer Vakuumtrommel auf ein ebenes Transportband aufgewalzt werden müssen, sondern stattdessen von einer gekrümmten Oberfläche auf eine andere gekrümmte Oberfläche übertragen werden. Zusätzlich erlaubt die Verwendung einer Vakuumtrommel als erste Transportvorrichtung eine besonders kompakte Bauform der Vorrichtung zur Herstellung einer Membran-Elektroden-Anordnung sowie eine einfachere Abstimmung der Fördergeschwindigkeiten der einzelnen MEA-Komponenten.

Die Vorrichtung zur Herstellung einer Membran-Elektroden-Anordnung kann weiter eine vierte Anordnungsvorrichtung, insbesondere eine vierte Anordnungsvorrichtung in Form einer Vakuumtrommel oder in Form einer Anpressrolle ohne Vakuum- oder Unterdruckfunktion, umfassen, die dazu eingerichtet ist, den zumindest einen ersten Trägerrahmen gemeinsam mit der Membran und gemeinsam mit dem zumindest einen zweiten Trägerrahmen auf einer ersten MEA-Komponente anzuordnen.

Die dritte und die vierte Anordnungsvorrichtung können jeweils unabhängig voneinander implementiert werden. Insbesondere kann eine Vorrichtung zur Herstellung einer Membran-Elektroden-Anordnung eine vierte Anordnungsvorrichtung aufweisen, ohne dass die Vorrichtung eine dritte Anordnungsvorrichtung aufweist. In einer anderen Variante kann die Vorrichtung zur Herstellung einer Membran-Elektroden-Anordnung eine dritte Anordnungsvorrichtung aufweisen, ohne dass die Vorrichtung eine vierte Anordnungsvorrichtung aufweist.

Weiter kann die Vorrichtung zur Herstellung einer Membran-Elektroden-Anordnung optional eine fünfte Anordnungsvorrichtung, insbesondere eine fünfte Anordnungsvorrichtung in Form einer Vakuumtrommel, aufweisen, die dazu eingerichtet ist, eine zweite MEA-Komponente, insbesondere eine GDL, auf einer der ersten MEA-Komponente abgewandten Oberfläche der Anordnung aus der ersten MEA-Komponente, dem zumindest einen ersten Trägerrahmen, der Membran und dem zumindest einen zweiten Trägerrahmen anzuordnen.

Ein Vorteil hierbei ist, dass eine Membran-Elektroden-Anordnung mit zwei Trägerrahmen, einer Membran und zwei GDL durch eine fortlaufende kontinuierliche Förderung von als Bahnmaterial bereitgestellten Trägerrahmen erfolgen kann.

Die als Bahnmaterial bereitgestellten ersten und/oder zweiten Trägerrahmen können voneinander getrennt oder vereinzelt werden, zum Beispiel mit einer Schneidvorrichtung, insbesondere durch eine Schneidvorrichtung mit einem Schneidzylinder. Die als Bahnmaterial bereitgestellten ersten und zweiten Trägerrahmen können voneinander getrennt oder vereinzelt werden, nachdem diese aneinander und/oder an/auf der Membran oder den Membranabschnitten angeordnet worden, sodass mehrere MEA-Komponentenabschnitte hergestellt werden, die jeweils zumindest einen ersten Trägerrahmen und zumindest einen zweiten Trägerrahmen und zumindest einen zwischen den Trägerrahmen angeordneten Membranabschnitt aufweisen. Insbesondere können die ersten und zweiten Trägerrahmen nach der Anordnung der zweiten MEA-Komponente/n durch die fünfte Anordnungsvorrichtung einer Schneidvorrichtung zugeführt werden, welche die als Bahnmaterial bereitgestellten ersten und zweiten Trägerrahmen vereinzelt oder voneinander trennt, sodass mehrere Membran-Elektroden-Anordnungen hergestellt werden, welche jeweils zumindest einen ersten Trägerrahmen und zumindest einen zweiten Trägerrahmen aufweisen.

Die erste MEA-Komponente kann eine Gasdiffusionsschicht, GDL, umfassen, insbesondere eine Anode oder eine Katode in Form einer GDL. Die zweite MEA-Komponente kann eine Gasdiffusionsschicht, GDL, umfassen, insbesondere eine Anode oder eine Katode in Form einer GDL. Die Membran kann insbesondere eine katalysatorbeschichtete Membran, CCM, sein. Die erste und/oder die zweite MEA-Komponente und/oder die Membran können jeweils als Rollenmaterial oder als Bahnmaterial von einer Materialrolle bereitgestellt werden.

In einer Variante kann die Vorrichtung zur Herstellung einer Membran-Elektroden-Anordnung eine erste und/oder eine zweite Stanzvorrichtung, insbesondere eine erste und/oder eine zweite Rotationsstanze, aufweisen. Die erste Stanzvorrichtung kann dazu eingerichtet sein, eine oder mehrere Ausnehmungen, insbesondere eine erste Ausnehmung, in den zumindest einen ersten Trägerrahmen einzubringen, zum Beispiel während dieser durch eine Vakuumtrommel oder durch die erste Transportvorrichtung gefördert wird. Die zweite Stanzvorrichtung kann dazu eingerichtet sein, eine oder mehrere Ausnehmungen, insbesondere eine erste Ausnehmung, in den zumindest einen zweiten Trägerrahmen einzubringen, insbesondere während dieser durch die zweite Anordnungsvorrichtung gefördert oder bewegt wird.

Optional können die Schneidvorrichtung und/oder die erste und/oder die zweite Stanzvorrichtung als Vakuumtrommel ausgebildet sein oder als Vakuumtrommel ausgebildete Vorrichtungselemente aufweisen. Ein Vorteil hierbei ist, dass jeweils aus den Trägerrahmen ausgestanzte und/oder überschüssige MEA-Komponentenabschnitte durch die Vakuumtrommel der Schneidvorrichtung und/oder der ersten oder zweiten Rotationsstanze fixiert und/oder von der Vakuumtrommel der ersten Anordnungsvorrichtung abgelöst und/oder abtransportiert werden können.

In einer Ausführungsform kann die Vorrichtung zur Herstellung von Membran-Elektroden-Anordnungen eine weitere Stanzvorrichtung, insbesondere eine Rotationsstanze aufweisen, die dazu ausgebildet und angeordnet ist, weitere Ausnehmungen, insbesondere in der Förderrichtung vor und nach einer jeweiligen Ausnehmung, in den ersten Trägerrahmen und/oder in den zweiten Trägerrahmen einzubringen, während diese gemeinsam mit einer zwischen ihnen angeordneten Membran durch die ersten Transportvorrichtung und/oder durch eine Vakuumtrommel gefördert werden. Die weiteren Ausnehmungen können sowohl die ersten Trägerrahmen als auch die zweiten Trägerrahmen vollständig durchdringen, wobei die Membran jeweils die erste Ausnehmung in den Trägerrahmen abdecken oder verschließen kann, jedoch nicht die jeweils weiteren Ausnehmungen abdeckt oder verschließt und/oder tangiert.

In einer Variante kann die Vorrichtung zur Herstellung von Membran-Elektroden-Anordnungen eine erste Trägerschichtaufnahmevorrichtung, insbesondere in Form einer Trägerschichtrolle, aufweisen, die dazu eingerichtet ist, eine Trägerschicht aufzunehmen, nachdem zumindest ein Teil des zumindest einen ersten Trägerrahmens von ihr abgelöst wurde. Weiter kann die Vorrichtung eine zweite Trägerschichtaufnahmevorrichtung, insbesondere in Form einer Trägerschichtrolle, aufweisen, die dazu eingerichtet ist, eine Trägerschicht aufzunehmen nachdem zumindest ein Teil des zumindest einen zweiten Trägerrahmens von ihr abgelöst wurde.

In einer Ausführungsform kann die Vorrichtung zur Herstellung einer Membran-Elektroden-Anordnung weiter eine zweite Transportvorrichtung, welche insbesondere ein Vakuumtransportband sein kann, aufweisen. Die zweite Transportvorrichtung kann dazu angeordnet und ausgebildet sein, die erste MEA-Komponente mit einer zweiten Fördergeschwindigkeit zu fördern. Weiter kann die zweite Transportvorrichtung dazu angeordnet und ausgebildet sein, die erste MEA-Komponente kontinuierlich oder taktweise mit der zweiten Fördergeschwindigkeit zu fördern. Ferner kann die zweite Transportvorrichtung dazu eingerichtet sein, die erste MEA-Komponente als Bahnmaterial oder als mehrere MEA-Komponentenabschnitte der ersten MEA-Komponente zu fördern, und/oder mittels eines Unterdrucks zu fixieren/halten.

Die zweite Transportvorrichtung kann die erste MEA-Komponente insbesondere spannungsfrei fördern.

Die zweite Fördergeschwindigkeit kann von der ersten Fördergeschwindigkeit und/oder von einer dritten Fördergeschwindigkeit einer dritten Transportvorrichtung in Form eines Vakuumtransportbandes verschieden sein. Insbesondere kann die Fördergeschwindigkeit der zweiten Transportvorrichtung geringer sein als die Fördergeschwindigkeit der ersten und/ oder der dritten Transportvorrichtung. Die Fördergeschwindigkeit der ersten Transportvorrichtung und/oder die Fördergeschwindigkeit der dritten Transportvorrichtung können höher sein als die Fördergeschwindigkeit der zweiten Transportvorrichtung. Die zweite Transportvorrichtung kann dazu eingerichtet sein, die erste MEA-Komponente und/oder MEA-Komponentenabschnitte der ersten MEA-Komponente an die erste Transportvorrichtung oder an die dritte Transportvorrichtung zu übergeben oder weiterzuleiten, ohne hierbei eine, insbesondere kontinuierliche, Förderung der ersten MEA-Komponente und/oder der MEA-Komponentenabschnitte der ersten MEA-Komponente zu unterbrechen.

Ein Vorteil hierbei ist, dass durch die unterschiedlichen Fördergeschwindigkeiten der Transportvorrichtungen ein Abstand der MEA-Komponentenabschnitte zueinander variiert, insbesondere vergrößert werden kann, während die MEA-Komponentenabschnitte ununterbrochen und/oder kontinuierlich gefördert und/oder zwischen den Transportvorrichtungen mit den unterschiedlichen Fördergeschwindigkeiten übergeben werden. Die Fertigung muss für die Variation oder Vergrößerung der Abstände zwischen den Komponentenabschnitten nicht unterbrochen und/oder verlangsamt werden. Die Variation oder Vergrößerung der Abstände zwischen den Komponentenabschnitten mittels zweier Transportvorrichtungen und/oder Vakuumtransportbänder ist auch deshalb vorteilhaft, da die MEA-Komponentenabschnitte auf der zweiten Transportvorrichtung, zum Beispiel durch ein Zerschneiden oder ein Zerteilen eines Bahnmaterials, hergestellt werden können und anschließend ohne Unterbrechung der Fertigung auf der ersten oder der dritten Transportvorrichtung weiterverarbeitet werden können. Die Variation oder Vergrößerung des Abstandes zwischen den MEA-Komponentenabschnitten erlaubt es hierbei auch solche Verarbeitungsschritte an/auf den MEA-Komponentenabschnitten vorzunehmen, die mit unmittelbar aneinander anliegenden MEA-Komponentenabschnitten, zum Beispiel unmittelbar nach einem Zerschneiden der als Bahnmaterial bereitgestellten ersten MEA-Komponente, nicht möglich wären.

Optional kann die Vorrichtung weiter eine Übergabevorrichtung, zum Beispiel einen Greifer oder Vakuumgreifer, umfassen, die dazu eingerichtet ist, die MEA-Komponentenabschnitte der ersten MEA von der zweiten Transportvorrichtung auf die erste oder dritte Transportvorrichtung zu bewegen. Dieses ist jedoch ausdrücklich nicht in allen Ausführungsformen notwendig; die Bewegung der MEA-Komponentenabschnitte der ersten MEA von der zweiten Transportvorrichtung auf die erste oder dritte Transportvorrichtung kann auch unmittelbar durch die Transportvorrichtungen selbst und ohne gesonderte Übergabevorrichtung erfolgen. Die Bewegung der MEA-Komponentenabschnitte der ersten MEA von der zweiten Transportvorrichtung auf die erste oder dritte Transportvorrichtung kann kontinuierlich erfolgen.

Optional kann eine Inspektionsvorrichtung dazu angeordnet und ausgebildet sein, einen Eigenschaftsfehler und/oder einen Anordnungsfehler der durch die Transportvorrichtung/en geförderten MEA-Komponenten und/oder MEA-Komponentenabschnitte festzustellen. Im Falle einer Feststellung eines Eigenschaftsfehlers und/oder eines Anordnungsfehlers kann eine MEA-Komponente oder ein MEA-Komponentenabschnitt von der weiteren Fertigung ausgeschlossen werden, zum Beispiel durch die Förderung der fehlerhaften MEA-Komponenten und/oder MEA-Komponentenabschnitte in eine Ausschussaufnahme oder Ablageeinrichtung.

Ein Verfahren zur Herstellung einer Membran-Elektroden-Anordnung, MEA, umfasst zumindest die Schritte:
- Fördern, mit einer ersten Transportvorrichtung, zumindest eines ersten Trägerrahmens mit einer ersten Fördergeschwindigkeit; und
- Anordnen, mit einer ersten Anordnungsvorrichtung in Form einer Vakuumtrommel, zumindest einer Membran auf dem zumindest einen Trägerrahmen, während dieser durch die erste Transportvorrichtung gefördert wird; und
- Anordnen, mit einer zweiten Anordnungsvorrichtung in Form einer Vakuumtrommel, zumindest eines zweiten Trägerrahmens auf der Membran, während diese gemeinsam mit dem ersten Trägerrahmen durch die erste Transportvorrichtung gefördert wird.

Der zumindest eine erste Trägerrahmen kann gemeinsam mit einer ersten Trägerschicht bereitgestellt werden, wobei der zumindest eine erste Trägerrahmen mit einem, insbesondere vollflächigen und/oder wärmelöslichen, Klebstoffauftrag auf der ersten Trägerschicht fixiert sein kann. Der zumindest eine zweite Trägerrahmen kann gemeinsam mit einer zweiten Trägerschicht bereitgestellt werden, wobei der zumindest eine zweite Trägerrahmen mit einem, insbesondere vollflächigen und/oder wärmelöslichen, Klebstoffauftrag auf der zweiten Trägerschicht fixiert werden kann.

In einer Variante kann zumindest eine erste Ausnehmung in den ersten Trägerrahmen eingebracht werden, während dieser auf der ersten Trägerschicht fixiert ist, zum Beispiel mit einer Rotationsstanze. Weiter kann optional zumindest eine erste Ausnehmung in den zweiten Trägerrahmen eingebracht werden, während dieser auf der zweiten Trägerschicht fixiert ist, zum Beispiel mit einer Rotationsstanze.

Optional kann das Verfahren zur Herstellung einer Membran-Elektroden-Anordnung, MEA, weiter zumindest einen der folgenden Schritte umfassen:
- Lösen des zumindest einen ersten Trägerrahmens von der ersten Trägerschicht;
- Lösen des zumindest einen zweiten Trägerrahmens von der zweiten Trägerschicht;
- Erwärmen des ersten und/oder des zweiten Trägerrahmens und eines auf dem ersten und/oder zweiten Trägerrahmen angeordneten vollflächigen und/oder wärmelöslichen Klebstoffauftrags;
- Anordnen einer ersten MEA-Komponente, insbesondere einer Gasdiffusionsschicht, GDL, auf dem ersten oder dem zweiten Trägerrahmen und/oder Anordnen einer zweiten MEA-Komponente, insbesondere einer GDL, auf dem ersten oder dem zweiten Trägerrahmen;
- Einbringen von weiteren Ausnehmungen in den ersten Trägerrahmen und/oder in den zweiten Trägerrahmen, insbesondere mit einer Rotationsstanze, wobei die weiteren Ausnehmungen insbesondere benachbart zu einer oder benachbart zu mehreren Außenkanten der ersten Ausnehmung angeordnet werden.

### Kurzbeschreibung der Figuren

Weitere Merkmale, Eigenschaften, Vorteile und mögliche Abwandlungen werden für einen Fachmann anhand der nachstehenden Beschreibung deutlich, in der auf die beigefügten Zeichnungen Bezug genommen ist. Dabei zeigen die Fig. jeweils schematisch Beispiele für eine Membran-Elektroden-Anordnung und eine Fertigungsvorrichtung für eine Membran-Elektroden-Anordnung.
- Fig. 1: zeigt ein Beispiel für einen Trägerrahmen und für eine Membran-Elektroden-Anordnung, MEA.
- Fig. 2: zeigt ein Beispiel für einen Trägerrahmen mit einem darauf angeordneten Klebstoff.
- Fig. 3 - 7: zeigen jeweils Beispiele für eine Vorrichtung zur Herstellung einer Membran-Elektroden-Anordnung.

### Detaillierte Beschreibung der Figuren

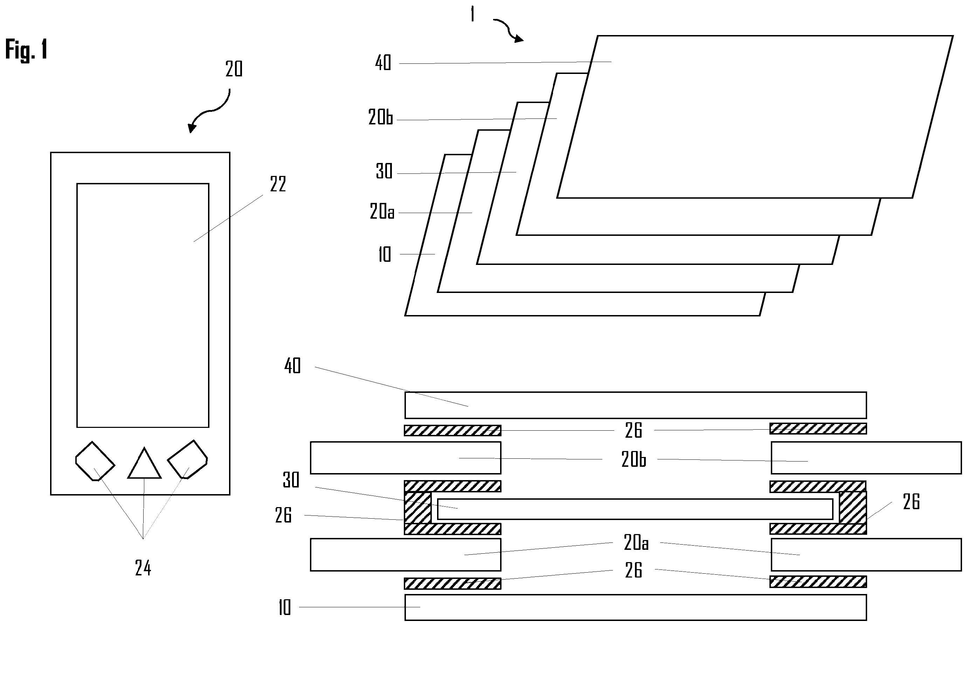

Sofern nicht explizit anders angegeben, sind übereinstimmende oder in ihrer Funktion vergleichbare Komponenten und Bestandteile in den schematischen Fig. 1 bis 7 mit übereinstimmenden Bezugszeichen versehen.

Fig. 1 zeigt einen Trägerrahmen 20 für eine Membran-Elektroden-Anordnung 1. Der Trägerrahmen 20 weist eine erste Ausnehmung 22 und mehrere weitere Ausnehmungen 24 auf. Die weiteren Ausnehmungen 24 können benachbart zu einer oder zu mehreren Außenkanten der ersten Ausnehmung 22 angeordnet sein. Mit anderen Worten können die weiteren Ausnehmungen 24 vollständig einseitig neben der ersten Ausnehmung 22 angeordnet sein oder die Ausnehmung 22 von mehreren Seiten umgeben. Im gezeigten Beispiel ist der Trägerrahmen 20 bereits von einem mehrere Trägerrahmen umfassenden Bahnmaterial, nämlich einer Trägerbahn, separiert. Dieses ist zur Fertigung einer Membran-Elektroden-Anordnung, MEA, jedoch nicht zwingend notwendig. Vielmehr können alternativ auch mehrere Membran-Elektroden-Anordnungen auf einem fortlaufenden Träger-Bahnmaterial mit mehreren Trägerrahmen gefertigt werden und anschließend voneinander separiert werden. Voneinander separierte Abschnitte einer ursprünglich als quasi-unendliches Bahnmaterial bereitgestellten Komponente für eine Membran-Elektroden-Anordnung sind Komponentenabschnitte.

Ferner zeigt die Fig. 1 schematisch den Aufbau einer zu fertigenden Membran-Elektroden-Anordnung 1. Die Membran-Elektroden-Anordnung 1 umfasst den ersten Trägerrahmen 20a mit der ersten Ausnehmung 22. Die erste Ausnehmung 22 ist hierbei von einem Klebstoffauftrag 26 umformt, der auf den Trägerrahmen 20a aufgetragen ist. Auf dem Trägerrahmen 20a mit dem Klebstoffauftrag 26 sind eine katalysatorbeschichtete Membran 30 sowie ein zweiter Trägerrahmen 20b, ein weiterer Klebstoffauftrag 26 und eine Gasdiffusionsschicht, GDL, 40 angeordnet. Die katalysatorbeschichtete Membran 30 und der zweite Trägerrahmen 20b sind durch den zwischen diesen Komponenten angeordneten Klebstoffauftrag 26 aneinander befestigt. Die GDL 40 ist an dem zweiten Trägerrahmen 20b durch den zwischen diesen Komponenten angeordneten Klebstoffauftrag 26 befestigt. Im gezeigten Beispiel ist die Gasdiffusionsschicht 40 eine Katode einer Membran-Elektroden-Anordnung 1. Auf der der Katode 40 abgewandten Oberfläche des ersten Trägerrahmens 20a sind ein weiterer Klebstoffauftrag 26 sowie eine weitere GDL 10, hier eine Anode, angeordnet. Die Katode 40 und die Anode 10 sind im gezeigten Beispiel jeweils als Schichtelektroden ausgebildet. In anderen, nicht gezeigten, Varianten kann die GDL 40 eine Anode ausbilden und die GDL 10 kann eine Katode ausbilden. Mit anderen Worten können die Anode und die Katode der gezeigten Anordnung ohne weitere strukturelle Änderung der Membran-Elektroden-Anordnung 1 miteinander vertauscht werden.

Im Folgenden werden die in den Fig. gezeigten Ausführungsbeispiele daher mit einer Anordnung aus Katode 40 und Anode 10 beschrieben, wobei klar ist, dass es sich bei der Katode 40 und der Anode 10 jeweils um eine GDL handelt und dass Anode und Katode als zueinander korrespondierende Elemente jeweils miteinander ausgetauscht werden können, ohne die Struktur der in den Fig. gezeigten Vorrichtungen über das Austauschen von Katode und Anode hinaus zu verändern.

Der erste Trägerrahmen 20a und der zweite Trägerrahmen 20b sind im gezeigten Ausführungsbeispiel der Membran-Elektroden-Anordnung 1 identisch ausgeformt und weisen jeweils identisch ausgeformte und identisch angeordnete Ausnehmungen 22, 24 auf. Der erste Trägerrahmen 20a und der zweite Trägerrahmen 20b sind so übereinander angeordnet, dass die jeweiligen Ausnehmungen 22, 24 in den Trägerrahmen einander jeweils gegenüberliegen, wobei die Membran 30 zumindest die erste Ausnehmung 22 in dem ersten und in dem zweiten Trägerrahmen überdeckt oder abdeckt.

Wie in der Fig. 1 gezeigt, kann die katalysatorbeschichtete Membran 30 zwischen den Trägerrahmen 20a, 20b angeordnet sein, wobei der zwischen den Trägerrahmen 20a, 20b angeordnete Klebstoffauftrag 26 sowohl zur Befestigung oder Fixierung der Klebstoffrahmen aneinander als auch zur Befestigung oder Fixierung der Membran 30 an den Trägerrahmen 20a, 20b dienen kann.

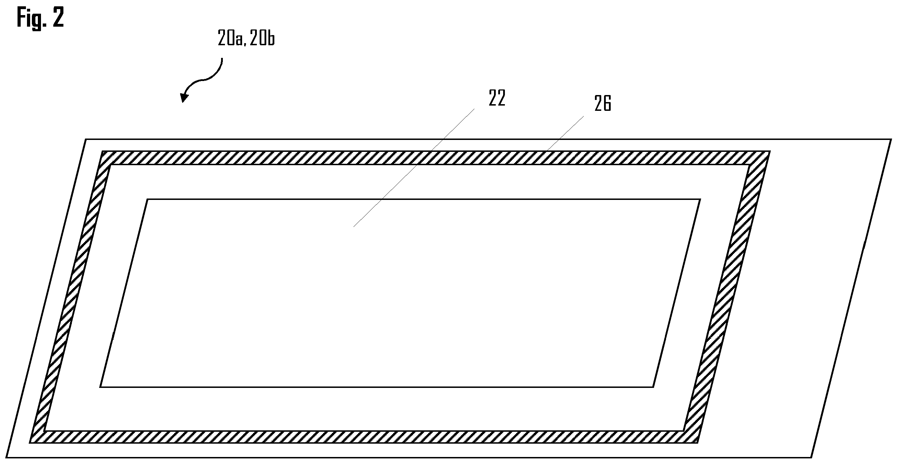

Die Fig. 2 zeigt ein Beispiel für einen Trägerrahmen 20a, 20b mit einer ersten Ausnehmung 22 und einem auf den Trägerrahmen 20a, 20b aufgetragenen Klebstoffauftrag 26 in Form eines Klebstoffrahmens, der die erste Ausnehmung 22 vollständig umformt, in einer schematisch-perspektivischen Ansicht. Nicht gezeigte andere Beispiele für Trägerrahmen 20a, 20b können auch weitere Ausnehmungen aufweisen. Die gezeigte erste Ausnehmung 22 des Trägerrahmens 20a, 20b kann zum Beispiel mit einem Stanzverfahren oder einem Fräsverfahren hergestellt werden.

In alternativen, nicht gezeigten, Ausführungsbeispielen kann der Klebstoffauftrag auch vollflächig auf einen oder auf beide Trägerrahmen 20a, 20b aufgetragen werden, wobei auch der in diesem Fall vollflächig auf den oder die Trägerrahmen 20a, 20b aufgetragene Klebstoffauftrag 26 zumindest die erste Ausnehmung 22 in dem Trägerrahmen 20a, 20b vollständig umformt oder umschließt.

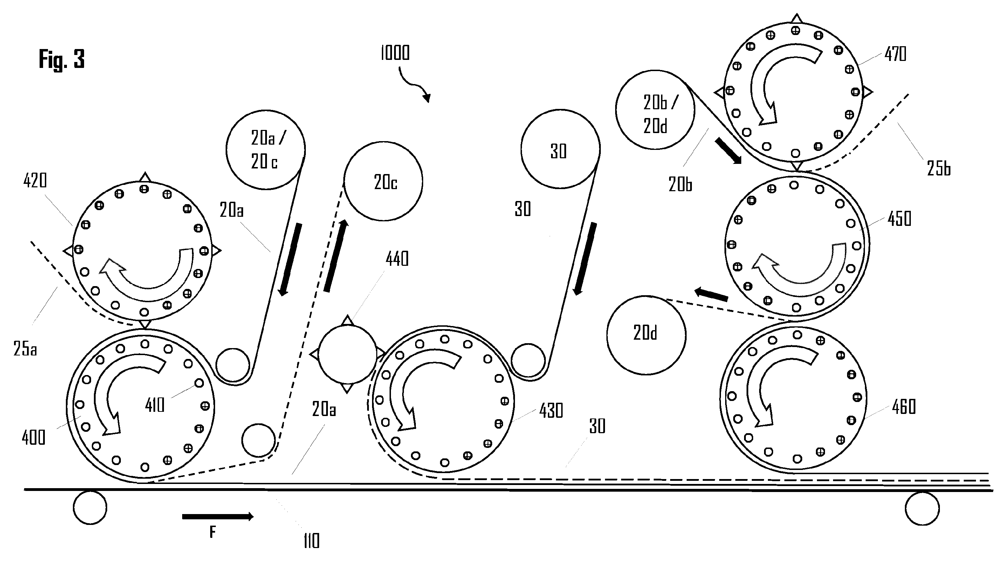

Fig. 3 zeigt ein Beispiel für die Anordnung einer Membran 30 für eine Membran-Elektroden-Anordnung auf einem ersten Trägerrahmen 20a, wobei der erste Trägerrahmen 20a als fortlaufendes und quasi-unendliches Bahnmaterial von einer Bahnmaterialrolle bereitgestellt wird. Mit anderen Worten umfasst das von der Rolle bereitgestellte quasi-unendliche Bahnmaterial mehrere Trägerrahmen 20a, die noch nicht voneinander getrennt oder vereinzelt sind.

Im gezeigten Beispiel wird der erste Trägerrahmen 20a als fortlaufendes und quasi-unendliches Bahnmaterial gemeinsam mit einer ersten Trägerschicht 20c bereitgestellt, wobei der erste Trägerrahmen 20a mit einem vollflächigen wärmelöslichen Klebstoffauftrag auf der ebenfalls als fortlaufendes Bahnmaterial bereitgestellten Trägerschicht 20c fixiert ist.

Die bereitgestellten ersten Trägerrahmen 20a werden gemeinsam mit der ersten Trägerschicht 20c zu einer Vakuumtrommel 400 gefördert und von dieser mittels Unterdruck fixiert und, durch eine Drehung der Vakuumtrommel 400, kontinuierlich entlang einer Kreisbahn oder eines Kreisbahnabschnitts weitergefördert.

Die Vakuumtrommel 400 weist mehrere Öffnungen 410 auf. Die Öffnungen 410 befinden sich in der Mantelfläche der Vakuumtrommel 400 und sind in den Fig. aus Übersichtsgründen lediglich schematisch gezeigt. Die Vakuumtrommel 400 ist dazu eingerichtet, einen Unterdruck zu erzeugen und die ersten Trägerrahmen 20a und/oder die erste Trägerschicht 20c an ihrer Mantelfläche zu fixieren und schlupffrei zu fördern. Der erzeugte Unterdruck kann hierbei selektiv für jede der Öffnungen 410 aktiviert oder deaktiviert werden. Mit anderen Worten kann für jede einzelne Öffnung 410 ein durch die Vakuumtrommel 400 erzeugter Unterdruck angelegt und anschließend wieder neutralisiert oder aufgehoben werden, wobei das Anlegen und Aufheben des Unterdrucks für jede der Öffnungen 410 unabhängig von den jeweils weiteren Öffnungen geschehen kann. Optional können die Öffnungen 410 hierzu selektiv verschlossen oder geöffnet werden, dieses ist jedoch nicht in allen Ausführungsformen notwendig.

Durch eine Drehung um eine erste Rotationsachse fördert die Vakuumtrommel 400 die ersten Trägerrahmen 20a zu einer Rotationsstanze 420, die dazu eingerichtet ist, jeweils zumindest eine erste Ausnehmung 22 in jeden der als fortlaufendes Bahnmaterial bereitgestellten ersten Trägerrahmen 20a einzustanzen. In anderen, nicht gezeigten, Ausführungsformen können die als Bahnmaterial bereitgestellten Trägerrahmen auch bereits mit einer oder mehreren Ausnehmungen versehen sein. Die Rotationsstanze 420 bringt die ersten Ausnehmungen 22 in die ersten Trägerrahmen 20a ein, während diese auf der ersten Trägerschicht 20c angeordnet sind.

Weiter zeigt die Fig. 3, dass die Rotationsstanze 420 selbst zumindest teilweise als Vakuumtrommel ausgebildet ist. Die Rotationsstanze 420 weist ebenfalls mehrere Öffnungen auf. Die Öffnungen befinden sich in der Mantelfläche der Rotationsstanze 420 und sind in den Fig. aus Übersichtsgründen lediglich schematisch gezeigt. Die Rotationsstanze 420 ist dazu eingerichtet, einen Unterdruck zu erzeugen und aus den ersten Trägerrahmen 20a ausgestanzte Materialabschnitte 25a an ihrer Mantelfläche zu fixieren und von der Vakuumtrommel 400 weg zu fördern. Der erzeugte Unterdruck kann hierbei selektiv für jede der Öffnungen aktiviert oder deaktiviert werden. Mit anderen Worten kann für jede einzelne Öffnung ein durch die Rotationsstanze 420 erzeugter Unterdruck angelegt und anschließend wieder neutralisiert oder aufgehoben werden, wobei das Anlegen und Aufheben des Unterdrucks für jede der Öffnungen unabhängig von den jeweils weiteren Öffnungen geschehen kann. Optional können die Öffnungen hierzu selektiv verschlossen oder geöffnet werden, dieses ist jedoch nicht bei allen Ausführungsformen notwendig.

Die Vakuumtrommel 400 ist im gezeigten Beispiel eine beheizbare Vakuumtrommel, die den vollflächigen wärmelöslichen Klebstoffauftrag zwischen den ersten Trägerrahmen 20a und der ersten Trägerschicht 20c erwärmt und hierdurch löst, sodass die Fixierung der ersten Trägerrahmen 20a an der ersten Trägerschicht 20c aufgehoben oder freigegeben wird.

Ein Vorteil der zumindest teilweisen Ausbildung der Rotationsstanze 420 als Vakuumtrommel ist, dass aus den ersten Trägerrahmen 20a ausgestanzte Materialabschnitte 25a, welche zum Beispiel bei den Herstellungen der ersten Ausnehmungen 22 anfallen können, von der Vakuumtrommel 400 abgelöst und durch die Rotationsstanze 420 wegbefördert werden können. Ein Aktivieren oder Deaktivieren des Unterdrucks, welcher durch die einzelnen Öffnungen in der Vakuumtrommel 400 und in der Rotationsstanze 420 auf die Materialabschnitte 25a wirkt, kann jeweils so aufeinander abgestimmt sein, dass die Materialabschnitte 25a von der Vakuumtrommel 400 freigegeben und durch die Rotationsstanze 420 fixiert werden. Die Vakuumtrommel 400 und die Rotationsstanze 420, insbesondere deren Rotationsgeschwindigkeiten und/oder deren Unterdruckerzeugungen, können hierzu durch eine gemeinsame Steuerung oder Regelung gesteuert oder geregelt werden.

Weiter ist die Vakuumtrommel 400 in dem in der Fig. 3 gezeigten Beispiel dazu eingerichtet, die ersten Trägerrahmen 20a, welche jeweils mit einer ersten Ausnehmung 22 versehen werden, zu einer Übergabeposition zu fördern und die als quasi-unendliches Bahnmaterial bereitgestellten ersten Trägerrahmen 20a an dieser Übergabeposition auf einer ersten Transportvorrichtung 110 anzuordnen. Zur Anordnung der ersten Trägerrahmen 20a auf der ersten Transportvorrichtung 110 wird der Unterdruck, welcher die ersten Trägerrahmen 20a an einer Mantelfläche der Vakuumtrommel 400 fixiert, aufgehoben. Durch die Erwärmung des vollflächigen wärmelöslichen Klebstoffauftrags zwischen den ersten Trägerrahmen 20a und der ersten Trägerschicht 20c wird das Ablösen der ersten Trägerrahmen 20a von der ersten Trägerschicht 20c ermöglicht.

Im in der Fig. 3 gezeigten Beispiel werden die Öffnungen 410 in der Mantelfläche der Vakuumtrommel 400 bei einem Aufheben oder Neutralisieren des Unterdrucks verschlossen. Für ein erneutes Fixieren der kontinuierlich zugeführten Trägerrahmen 20a und/oder der Trägerschicht 20c können die jeweiligen Öffnungen 410 nach einer Drehung der Vakuumtrommel 400 um einen bestimmten Winkel wieder geöffnet und/oder aktiviert werden. Beides ist jedoch ausdrücklich nicht in allen Ausführungsformen notwendig. Weiter können die in der Fig. 3 gezeigten Vakuumtrommeln eine haftungsreduzierende Beschichtung auf ihrer Mantelfläche/Oberfläche aufweisen, zum Beispiel eine TeflonBeschichtung. In anderen Ausführungsformen können die Vakuumtrommeln auch eine Gummi- oder Kunststoffbeschichtung auf ihrer Mantelfläche/Oberfläche aufweisen und/oder zumindest teilweise aus einem Gummi- oder Kunststoffmaterial gefertigt sein.

Nach dem Ablösen der ersten Trägerrahmen 20a von der ersten Trägerschicht 20c wird die erste Trägerschicht 20c zu einer ersten Trägerschichtaufnahmevorrichtung in Form einer Trägerschichtrolle gefördert. Die Trägerschichtaufnahmevorrichtung ist dazu eingerichtet, die erste Trägerschicht 20c aufzunehmen, nachdem die ersten Trägerrahmen 20a von ihr abgelöst wurden.

In dem in der Fig. 3 gezeigten Beispiel ist die erste Transportvorrichtung 110 ein Vakuumtransportband, das dazu eingerichtet ist, die ersten Trägerrahmen 20a zu einer ersten Anordnungsvorrichtung mit einer Vakuumtrommel 430 zu fördern. Die Vakuumtrommel 430 und die Vakuumtrommel 400 sind zueinander korrespondierend aufgebaut, wobei die Vakuumtrommel 430 zur Fixierung und zur Förderung einer Membran 30 eingerichtet ist.

Optional können die ersten Trägerrahmen 20a durch eine Klebstoffapplikationsvorrichtung (nicht gezeigt) jeweils mit einem Klebstoffauftrag 26 beschichtet werden, während die ersten Trägerrahmen 20a durch die erste Transportvorrichtung 110 gefördert werden. Der Klebstoffauftrag kann zur Befestigung oder Fixierung der Membran 30 und/oder eines oder mehrerer zweiter Trägerrahmen 20b an/auf den ersten Trägerrahmen 20a dienen. Optional kann auch ein weiterer Klebstoffauftrag 26 auf die Membran 30 aufgetragen werden, während diese gefördert wird, wobei dieser weitere Klebstoffauftrag zur Befestigung oder Fixierung der Membran 30 an/auf dem ersten und/oder dem zweiten Trägerrahmen dienen kann.

Die Membran 30 wird als fortlaufendes Bahnmaterial von einer Bahnmaterialrolle bereitgestellt und zur Vakuumtrommel 430 der ersten Anordnungsvorrichtung gefördert. Durch eine Drehung um eine Rotationsachse fördert die Vakuumtrommel 430 die Membran 30 zu einer Schneidvorrichtung 440, die dazu eingerichtet ist, die als Bahnmaterial bereitgestellte Membran 30 in mehrere Membranabschnitte oder MEA-Komponentenabschnitte zu zerschneiden oder zu separieren. In anderen, nicht gezeigten, Ausführungsformen kann die Membran 30 auch in Form von bereits vereinzelten oder separierten Membranabschnitten bereitgestellt werden.

Weiter ist die Vakuumtrommel 430 in dem in der Fig. 3 gezeigten Beispiel dazu eingerichtet, die zerteilte oder zerschnittene Membran 30 zu einer Übergabeposition zu fördern und dort auf den ersten Trägerrahmen 20a, welche jeweils durch die erste Transportvorrichtung 110 gefördert werden, anzuordnen. Die Vakuumtrommel 430 kann jeweils eine Membran 30 auf jeweils einem ersten Trägerrahmen 20a anordnen. Insbesondere kann die Vakuumtrommel 430 eine Membran 30 jeweils derart auf einem ersten Trägerrahmen 20a anordnen, dass die erste Ausnehmung 22 in dem ersten Trägerrahmen 20a jeweils überdeckt oder verschlossen wird. Um die Membran 30 auf den ersten Trägerrahmen 20a anzubringen, wird der Unterdruck aufgehoben, der die Membran 30 außen an der Vakuumtrommel 430 fixiert.

Nach dem Anordnen der zerschnittenen Membran 30 auf den ersten Trägerrahmen 20a werden diese gemeinsam durch die erste Transportvorrichtung 110 zu einer zweiten Anordnungsvorrichtung mit einer Vakuumtrommel 460 weiterbefördert.

Die zweite Anordnungsvorrichtung mit der Vakuumtrommel 460 ist dazu eingerichtet, jeweils einen als fortlaufendes Bahnmaterial bereitgestellten zweiten Trägerrahmen 20b auf dem als fortlaufendes Bahnmaterial von der ersten Transportvorrichtung 100 geförderten ersten Trägerrahmen 20a und der darauf angeordneten Membran 30 anzuordnen. Die Vakuumtrommel 460 und die Vakuumtrommel 400 sind einander entsprechend ausgebildet, wobei die Vakuumtrommel 460 die zweiten Trägerrahmen von einer weiteren Vakuumtrommel 450 ablöst oder übernimmt, bevor sie diese auf den Trägerrahmen 20a mit der Membran 30 anordnet.

Die zweiten Trägerrahmen 20b werden als fortlaufendes Bahnmaterial gemeinsam mit einer zweiten Trägerschicht 20d bereitgestellt und zur weiteren Vakuumtrommel 450 gefördert. Die zweiten Trägerrahmen 20b sind jeweils mit einem vollflächigen wärmelöslichen Klebstoffauftrag auf der zweiten Trägerschicht 20d angeordnet. Auch die weitere Vakuumtrommel 450 ist korrespondierend zur Vakuumtrommel 400 ausgestaltet. Die weitere Vakuumtrommel 450 fördert die als Bahnmaterial gemeinsam mit der zweiten Trägerschicht 20d bereitgestellten Trägerrahmen 20b zu einer Rotationsstanze 470, die korrespondierend zur Rotationsstanze 420 ebenfalls als Vakuumtrommel ausgebildet ist. Die Rotationsstanze 470 bringt jeweils eine erste Ausnehmung 22 in die zweiten Trägerrahmen 20b ein und entfernt die ausgestanzten Materialabschnitte 25b von der Mantelfläche der Vakuumtrommel 450. Ebenso wie die Vakuumtrommel 400 ist auch die Vakuumtrommel 450 eine beheizbare oder erwärmbare Vakuumtrommel, die den vollflächigen wärmelöslichen Klebstoffauftrag zwischen den zweiten Trägerrahmen 20b und der zweiten Trägerschicht 20d erwärmt und hierdurch die Fixierung der zweiten Trägerrahmen 20b an der zweiten Trägerschicht 20d aufhebt oder freigibt.

Die Vakuumtrommel 450 fördert die zweiten Trägerrahmen 20b anschließend zur Vakuumtrommel 460 der zweiten Anordnungsvorrichtung. An einer Übergabestelle zwischen den Vakuumtrommeln 450, 460 neutralisiert die Vakuumtrommel 450 einen Unterdruck, mit dem sie die zweiten Trägerrahmen 20b und die zweite Trägerschicht 20d an ihrer Mantelfläche fixiert. Gleichzeitig übernimmt die Vakuumtrommel 460 die zweiten Trägerrahmen 20b von der Vakuumtrommel 450 und/oder von der zweiten Trägerschicht 20d, indem sie durch die Öffnungen in der Manteloberfläche einen Unterdruck erzeugt, welcher auf die zweiten Trägerrahmen 20b wirkt.

Nach dem Ablösen der zweiten Trägerrahmen 20b von der zweiten Trägerschicht 20d wird die erste Trägerschicht 20b zu einer zweiten Trägerschichtaufnahmevorrichtung in Form einer Trägerschichtrolle gefördert. Die Trägerschichtaufnahmevorrichtung ist dazu eingerichtet, die zweite Trägerschicht 20d aufzunehmen, nachdem die zweiten Trägerrahmen 20b von ihr abgelöst wurden.

Die Vakuumtrommel 460 der zweiten Anordnungsvorrichtung fördert die zweiten Trägerrahmen 20b zu einer Übergabestelle und ordnet die zweiten Trägerrahmen 20b auf den ersten Trägerrahmen 20a und der Membran 30 so an, dass die ersten Ausnehmungen 22 der jeweiligen Trägerrahmen 20a, 20b jeweils übereinander angeordnet sind. Zur Anordnung der zweiten Trägerrahmen 20b auf den ersten Trägerrahmen 20a mit der Membran 30 wird der Unterdruck, welcher die ersten Trägerrahmen 20b an einer Mantelfläche der Vakuumtrommel 460 fixiert, aufgehoben.

Hierdurch entsteht eine Membran-Elektroden-Anordnung mit einem ersten Trägerrahmen 20a, einer Membran 30 und einem ersten Trägerrahmen 20b, welche weiter von der ersten Transportvorrichtung 110 gefördert wird. Diese Anordnung kann folgend einer Aushärtungsstation zur Aushärtung des Klebstoffauftrags 26 (nicht gezeigt) und/oder einer Anpressvorrichtung, zum Beispiel einer Kaltlaminationsstation mit Anpress- oder Laminationsrollen (nicht gezeigt), zugeführt werden.

Weiter kann die durch die in der Fig. 3 gezeigte Vorrichtung gefertigte Anordnung mit einem ersten Trägerrahmen 20a, einer Membran 30 und einem ersten Trägerrahmen 20b an eine andere, insbesondere dritte, Transportvorrichtung (nicht gezeigt) übergeben werden und/ oder einer weiteren Fertigung oder Verarbeitung zugeführt werden. Zum Beispiel können die als fortlaufendes Bahnmaterial ausgebildeten ersten und zweiten Trägerrahmen 20a, 20b gemeinsam mit der zwischen ihnen angeordneten Membran 30 von der ersten Transportvorrichtung weiter zu einer Schneidvorrichtung (nicht gezeigt) gefördert werden, welche die Membran-Elektroden-Anordnung in mehrere Abschnitte zerteilt oder zerschneidet, die jeweils einen vereinzelten oder separierten ersten Trägerrahmen 20a, einen Membranabschnitt 30 und einen vereinzelten oder separierten zweiten Trägerrahmen 20b aufweisen.

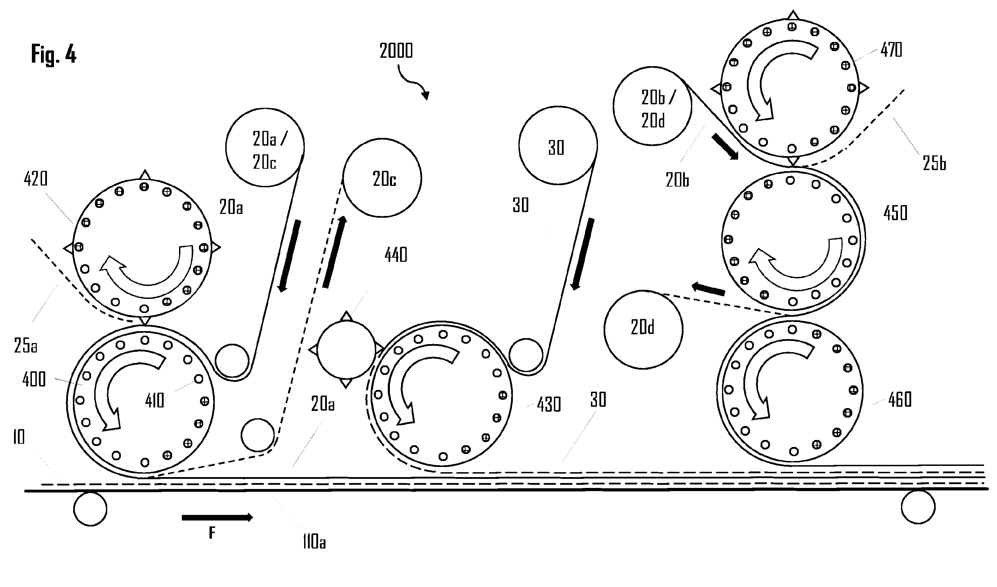

Die Fig. 4 zeigt eine Weiterentwicklung 2000 der in der Fig. 3 gezeigten Vorrichtung 1000. Statt der ersten Transportvorrichtung 110 zeigt die Fig. 4 die erste Transportvorrichtung 110a. Die erste Transportvorrichtung 110a ist ebenso wie die in der Fig. 3 gezeigte Transportvorrichtung 110 ein Vakuumtransportband. Im Unterschied zu der in der Fig. 3 gezeigten Vorrichtung fördert die erste Transportvorrichtung 110a jedoch eine Anode/GDL 10 in Form von vereinzelten und voneinander beabstandeten Komponentenabschnitten. Mit anderen Worten fördert die erste Transportvorrichtung 110a mehrere voneinander separierte Abschnitte einer Anode/GDL 10 in der Förderrichtung F.

Die erste Vakuumtrommel 400 ist in dem in der Fig. 4 gezeigten Beispiel dazu eingerichtet, die ersten Trägerrahmen 20a jeweils auf einem MEA-Komponentenabschnitt, nämlich auf einem Abschnitt der Anode/GDL 10 anzuordnen. Die erste Vakuumtrommel 400 kann die ersten Trägerrahmen 20a insbesondere so auf den jeweiligen Abschnitten der Anode/GDL 10 anordnen, dass die erste Ausnehmung in den ersten Trägerrahmen von den Abschnitten der Anode/GDL 10 jeweils vollständig abgedeckt oder verschlossen wird.

Im Weiteren ist das in der Fig. 4 gezeigte Beispiel für eine Vorrichtung zur Herstellung von Membran-Elektroden-Anordnungen mit dem in der Fig. 3 gezeigten Beispiel für eine Vorrichtung zur Herstellung von Membran-Elektroden-Anordnungen identisch. Da die ersten Trägerrahmen jedoch bereits auf einer Anode/GDL 10 angeordnet werden, wird in dem in der Fig. 4 gezeigten Beispiel eine Anordnung mit einer Anode/GDL 10, einem ersten Trägerrahmen 20a, einer Membran 30 und einem zweiten Trägerrahmen 20b gefertigt. Optional kann auf dieser Anordnung zusätzlich noch eine Katode/GDL 40 hinzugefügt werden, zum Beispiel mit einer zusätzlichen Anordnungsvorrichtung mit einer Vakuumtrommel (nicht gezeigt), welche eine Katode/GDL 40 auf dem zweiten Trägerrahmen 20b anordnet, nachdem dieser auf dem ersten Trägerrahmen 20a und der Membran 30 angeordnet wurde. Auf die Kathode/GDL 40 und/oder auf den Trägerrahmen 20b kann zuvor ein Klebstoffauftrag oder Klebstoffrahmen angeordnet oder aufgebracht werden, der zur Befestigung oder Fixierung der Kathode/GDL 40 auf dem Trägerrahmen 20b dient oder diese zumindest unterstützt. Hierdurch kann die in der Fig. 1 gezeigte Membran-Elektroden-Anordnung 1 hergestellt werden. Anschließend können die als fortlaufendes Bahnmaterial ausgebildeten ersten und zweiten Trägerrahmen 20a, 20b mit den weiteren MEA-Komponenten, nämlich mit der Anode/GDL 10, der Membran 30 und/ oder der Katode/GDL 40, von der ersten Transportvorrichtung 110a weiter zu einer Schneidvorrichtung (nicht gezeigt) gefördert werden, welche die Membran-Elektroden-Anordnung 1 in mehrere Abschnitte zerteilt oder zerschneidet.

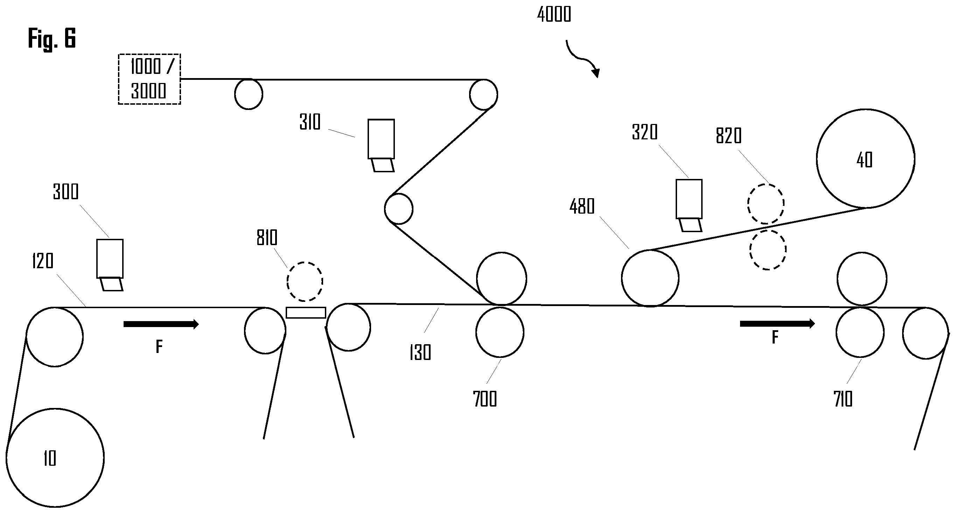

In einer Variante kann die erste Transportvorrichtung 110a die Abschnitte der Anode/GDL 10 von einer anderen Transportvorrichtung übernehmen, bevor die ersten Trägerrahmen 20a jeweils auf den Abschnitten der Anode/GDL 10 angeordnet werden, wobei die erste Transportvorrichtung 110a die Abschnitte der Anode/GDL 10 mit einer höheren Geschwindigkeit fördern kann als die Transportvorrichtung, von der sie die Abschnitte der Anode/GDL 10 jeweils übernimmt. Ein Vorteil hierbei ist, dass die Abstände der Abschnitte der Anode/GDL 10 zueinander hierdurch vergrößert werden können. Hierdurch wird es insbesondere möglich, die ersten Trägerrahmen 20a so auf den Abschnitten der Anode/GDL 10 anzuordnen, dass die ersten Trägerrahmen 20a die jeweiligen Abschnitte der Anode/GDL 10 in der Förderrichtung und/oder entgegen der Förderrichtung überragen. Die Übergabe von MEA-Komponentenabschnitten von einer Transportvorrichtung zu einer anderen Transportvorrichtung mit höherer Fördergeschwindigkeit wird nachfolgend anhand der Fig. 6 noch näher erläutert.

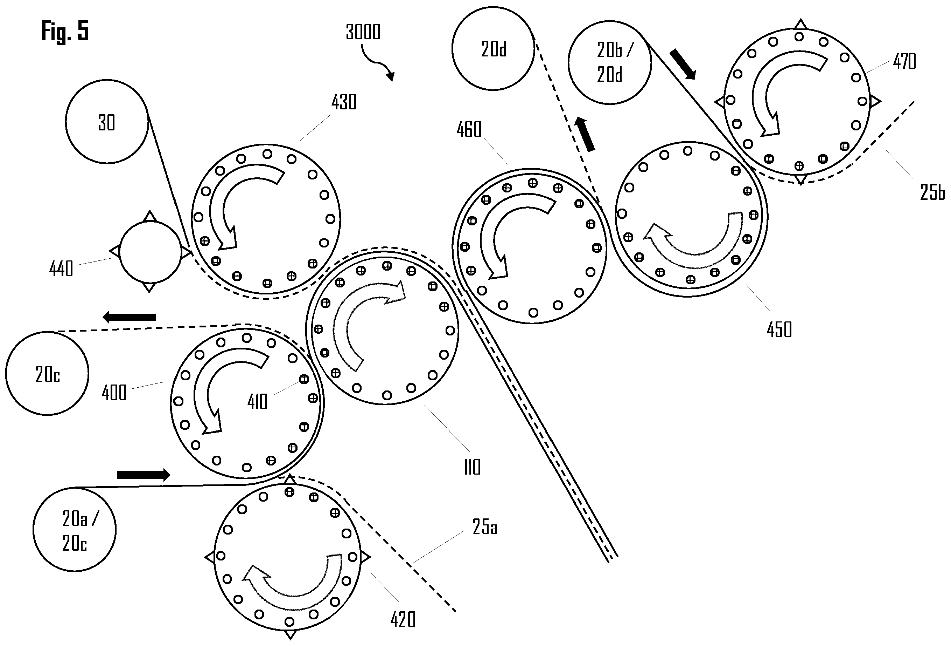

Die Fig. 5 zeigt eine Alternative 3000 zu der in der Fig. 3 gezeigten Vorrichtung 1000. Im Unterschied zu der in der Fig. 3 gezeigten Vorrichtung ist in dem in der Fig. 5 gezeigten Beispiel die erste Transportvorrichtung 110 selbst als rotierbare Vakuumtrommel ausgebildet. Die rotierbare Vakuumtrommel, welche die Transportvorrichtung 110 ausbildet, ist korrespondierend zur Vakuumtrommel 400 ausgebildet.

Die Ausgestaltung der ersten Transportvorrichtung 110 als Vakuumtrommel erlaubt einerseits eine besonders kompakte Bauweise der Vorrichtung zur Herstellung einer Membran-Elektroden-Anordnung, wobei gleichzeitig eine Präzision der Anordnung der MEA-Komponenten auf der ersten Transportvorrichtung 110 gegenüber dem in der Fig. 3 gezeigten Beispiel noch weiter verbessert werden kann. Ein Anwalzen oder Anpressen der MEA-Komponenten auf die erste Transportvorrichtung 110 wird gegenüber dem in der Fig. 3 gezeigten Beispiel dadurch weiter verbessert, dass die Oberfläche oder Mantelfläche einer Vakuumtrommel unelastischer ausgebildet werden kann als die eines Vakuumtransportbands. Weiter werden die MEA-Komponenten beim Übertragen von einer gekrümmten Oberfläche einer Vakuumtrommel auf die gekrümmte Oberfläche einer anderen Vakuumtrommel geringeren Materialspannungen ausgesetzt als bei einem Übertragen von einer gekrümmten Oberfläche einer Vakuumtrommel auf eine ebene Oberfläche eines Vakuumtransportbandes.

Ein weiterer Vorteil der in der Fig. 5 gezeigten Anordnung ist, dass einem unerwünschten Versatz zwischen den ersten Trägerrahmen 20a und den zweiten Trägerrahmen 20b besser entgegengewirkt werden kann und ein ansonsten nötiges Ausrichten der Trägerbahnen quer zur Förderrichtung entfallen kann.

Ferner können die in der Fig. 5 gezeigten Vakuumtrommeln und/oder Rotationsstanzen und/oder Schneidvorrichtungen einen gemeinsamen Antrieb für die Rotationsbewegungen der Vakuumtrommeln und/oder Rotationsstanzen und/oder Schneidvorrichtungen und/oder eine gemeinsame Regelung oder Steuerung für die Rotationsbewegungen der Vakuumtrommeln und/oder Rotationsstanzen und/oder Schneidvorrichtungen aufweisen. Mit anderen Worten können alle in der Fig. 5 gezeigten Vakuumtrommeln und/oder Rotationsstanzen und/oder Schneidvorrichtungen, ausdrücklich auch die Vakuumtrommel der ersten Transportvorrichtung 110, oder zumindest ein Teil der in der Fig. 5 gezeigten Vakuumtrommeln und/oder Rotationsstanzen und/oder Schneidvorrichtungen durch einen gemeinsamen Antrieb rotiert werden. Die Umfangsgeschwindigkeiten der Vakuumtrommeln und/oder Rotationsstanzen und/oder Schneidvorrichtungen können zueinander gleich oder verschieden sein. Dieses vereinfacht eine Synchronisation der Rotationsbewegungen der Vakuumtrommeln und ermöglicht eine weitere Steigerung der Fertigungspräzision der Vorrichtung zur Herstellung der Membran-Elektroden-Anordnung. Insbesondere kann ein sogenanntes "Faltenwerfen" der als Bahnmaterial bereitgestellten ersten Trägerrahmen 20a und zweiten Trägerrahmen 20b so verhindert oder zumindest vermindert werden.

In einer Variante können zumindest die Vakuumtrommeln 110, 400, 450 und 460 und/oder die Rotationsstanzen 420 und 470 einen gemeinsamen Antrieb aufweisen oder durch einen ersten gemeinsamen Antrieb angetrieben werden. Die Vakuumtrommel 430 und die Schneidvorrichtung 440 können einen zweiten gemeinsamen Antrieb aufweisen oder durch einen zweiten gemeinsamen Antrieb angetrieben werden. Die Umfangsgeschwindigkeiten der Vakuumtrommeln und/oder Rotationsstanzen und/oder Schneidvorrichtungen können zueinander gleich oder verschieden sein.

Im Weiteren ist das in der Fig. 5 gezeigte Beispiel für eine Vorrichtung zur Herstellung von Membran-Elektroden-Anordnungen mit dem in der Fig. 3 gezeigten Beispiel für eine Vorrichtung zur Herstellung von Membran-Elektroden-Anordnungen identisch. Insbesondere fertigt auch die in der Fig. 5 gezeigte Vorrichtung eine Anordnung mit zumindest einem ersten Trägerrahmen 20a, einer Membran 30 und zumindest einem zweiten Trägerrahmen 20b, wobei die Trägerrahmen 20a, 20b jeweils in Form eines fortlaufenden Bahnmaterials ausgebildet sind und mit einer weiteren Fertigungsstation (nicht gezeigt) in mehrere einzelne MEA-Komponentenabschnitte zerschnitten oder zerteilt werden können.

In einer weiteren, nicht gezeigten, Ausführungsform kann die Herstellung von Membran-Elektroden-Anordnungen kann eine weitere Rotationsstanze dazu ausgebildet und angeordnet sein, weitere Ausnehmungen 24, insbesondere in Förderrichtung vor und nach einer jeweiligen Ausnehmung 22, in den ersten Trägerrahmen 20a und/oder in den zweiten Trägerrahmen 20b einzubringen, während diese gemeinsam mit der zwischen ihnen angeordneten Membran 30 durch die ersten Transportvorrichtung 110 und/oder durch die Vakuumtrommel 460 gefördert werden. Die weiteren Ausnehmungen 24 können sowohl die ersten Trägerrahmen 20 als auch die zweiten Trägerrahmen 20b vollständig durchdringen, wobei die Membran 30 jeweils die erste Ausnehmung 22 in den Trägerrahmen 20a, 20b abdeckt oder verschließt, jedoch nicht die jeweils weiteren Ausnehmungen 24 abdeckt oder verschließt und/oder tangiert. Die weitere Rotationsstanze kann insbesondere mit dem ersten gemeinsamen Antrieb angetrieben werden. Die Vakuumtrommel 460 oder die erste Transportvorrichtung 110 kann für die weitere Rotationsstanze ein Gegenlager bilden. Ein Vorteil des Einbringens der weiteren Ausnehmungen 24 auf diese Weise ist, dass die weiteren Ausnehmungen 24 zueinander passgenau gefertigt werden können.

Die Fig. 6 zeigt eine Weiterbildung 4000 der in den Fig. 3 und Fig. 5 gezeigten Vorrichtungen 1000, 3000 zur Herstellung einer Membran-Elektroden-Anordnung.

In dem in der Fig. 6 gezeigten Beispiel wird eine Anode/GDL 10 als fortlaufendes quasi-unendliches Rollenmaterial bereitgestellt und durch eine zweite Transportvorrichtung 120, die ein Vakuumtransportband ist, kontinuierlich in der Förderrichtung F gefördert.

In einem ersten Bearbeitungsschritt bringt eine erste Applikationsvorrichtung 300 einen Klebstoffauftrag auf die Anode/GDL 10 auf. Die Klebstoffzusammensetzung des Klebstoffauftrags auf der Anode/GDL 10 kann mit einer Klebstoffzusammensetzung für die Trägerrahmen 20a, 20b, die auf diese zur Befestigung oder Fixierung der Trägerrahmen aneinander und/ oder zur Befestigung oder Fixierung der Membran an den Trägerrahmen 20a, 20b dient, übereinstimmen.

Die kontinuierliche Förderung der Anode/GDL 10 durch die zweite Transportvorrichtung 120 wird während des Auftragens des Klebstoffs durch die erste Applikationsvorrichtung 300 nicht unterbrochen. Der Klebstoffauftrag kann insbesondere ein unter UV-Licht, Druck und/ oder Wärme aushärtender Klebstoff sein. In einer nicht gezeigten Variante der Vorrichtung zur Fertigung von Membran-Elektroden-Anordnungen kann diese weiter eine UV-Aushärtungsstation aufweisen, die dazu eingerichtet ist, den Klebstoffauftrag mittels UV-Licht zumindest teilweise auszuhärten.

Anschließend wird die Anode/GDL 10 zu einer ersten Schneidvorrichtung 810 gefördert, die dazu eingerichtet ist, die als Bahnmaterial bereitgestellte erste MEA-Komponente, hier die Anode 10 in Form einer GDL, in mehrere MEA-Komponentenabschnitte zu zerschneiden.

Die erste Schneidvorrichtung 810 hat im gezeigten Beispiel einen Schneidzylinder, der mit einer Schneidauflage, hier einem Schneidtisch/Schneidamboss, zusammenwirkt, über den die MEA-Komponenten zum Zerschneiden geführt werden. Die MEA-Komponenten werden im gezeigten Beispiel von der zweiten Transportvorrichtung 120 auf und über die Schneidauflage gefördert.

Anschließend werden die MEA-Komponentenabschnitte von der zweiten Transportvorrichtung 120 und/oder der Schneidauflage auf die dritte Transportvorrichtung 130 angeordnet oder transportiert. Die dritte Transportvorrichtung 130 ist im gezeigten Beispiel ebenfalls ein Vakuumtransportband. Die dritte Transportvorrichtung 130 hat zur zweiten Transportvorrichtung 120 einen Abstand von etwa 1 cm, sodass die die MEA-Komponentenabschnitte über die Schneidauflage von der zweiten Transportvorrichtung 120 unmittelbar auf die dritte Transportvorrichtung 130 zugeführt werden können. In anderen, nicht gezeigten, Ausführungsformen können jedoch auch beliebige andere Abstände zwischen der dritten und zweiten Transportvorrichtung realisiert werden, wobei diese nicht gezeigten Ausführungsformen alle sonstigen Merkmale der hier gezeigten Ausführungsform aufweisen können. In weiteren, nicht gezeigten, Ausführungsformen kann die Vorrichtung zum Beispiel auch einen Vakuumgreifer aufweisen, der die MEA-Komponentenabschnitte von der zweiten Transportvorrichtung 120 entnimmt und auf der dritten Transportvorrichtung 130 anordnet. Dieses ist jedoch ausdrücklich nicht in allen Ausführungsformen notwendig.

Weiter kann das Vakuumtransportband der zweiten Transportvorrichtung 120 optional auch einen Unterdruck, mit dem die MEA-Komponentenabschnitte während der Förderung in der Förderrichtung F fixiert sind, aufheben oder neutralisieren, um das Anordnen oder Transportieren der MEA-Komponentenabschnitte von der zweiten Transportvorrichtung 120 zu oder auf die dritte Transportvorrichtung 130 zu ermöglichen oder zu erleichtern.

Die dritte Transportvorrichtung 130 fördert die MEA-Komponentenabschnitte mit einer höheren Geschwindigkeit als die zweite Transportvorrichtung 120. Hierdurch wird ein Abstand zwischen den jeweils geförderten MEA-Komponentenabschnitten vergrößert, sodass auf diesen nun auch solche weiteren Komponenten- oder Komponentenabschnitte angeordnet werden können, die die bisher gefertigten MEA-Komponentenabschnitte in der Förderrichtung F überragen oder die größer sind als die bisher gefertigten MEA-Komponentenabschnitte.

Im in der Fig. 6 gezeigten Beispiel wird eine MEA-Komponentenanordnung mit einem ersten Trägerrahmen 20a, einer Membran 30 und einem zweiten Trägerrahmen 20b auf den durch die dritten Transportvorrichtung 130 geförderten voneinander beabstandeten MEA-Komponentenabschnitten, hier den voneinander separierten Abschnitten der Anode/GDL 10, angeordnet, wobei die Trägerrahmen 20a, 20b die MEA-Komponentenabschnitte jeweils in der Förderrichtung F überragen. Auf jedem Abschnitt der Anode/GDL 10 wird jeweils eine MEA-Komponentenanordnung mit einem ersten Trägerrahmen 20a, einer Membran 30 und einem zweiten Trägerrahmen 20b angeordnet, wobei die Abschnitte der Anode/GDL 10 jeweils zumindest eine erste Ausnehmung in einem der Trägerrahmen 20a, 20b überdecken oder verschließen. Die Trägerrahmen 20a, 20b sind in dem in der Fig. 6 gezeigten Beispiel zum Zeitpunkt des Anordnens auf den Abschnitten der Anode/GDL 10 noch nicht voneinander getrennt oder separiert.

Zur Verbesserung der Fixierung der Anode/GDL 10 an der MEA-Komponentenanordnung wird vor dem Anordnen ein Klebstoffauftrag auf den ersten oder den zweiten Trägerrahmen mit einer zweiten Applikationsvorrichtung 310 aufgebracht. Der Klebstoffauftrag kann insbesondere ein rahmenartiger Klebstoffauftrag oder Klebstoffrahmen sein, der auf der Anode/GDL 10 eine klebstofflose Fläche einschließt und/oder eine Ausnehmung 22 in dem ersten oder zweiten Trägerrahmen rahmenartig umgibt oder umformt. In anderen, nicht gezeigten, Ausführungsformen kann ein Klebstoffauftrag alternativ oder ergänzend auch auf die Anode/GDL 10 aufgetragen werden. Der Klebstoffauftrag kann insbesondere ein unter UV-Licht, Druck und/ oder Wärme aushärtender Klebstoff sein. In einer nicht gezeigten Variante zur gezeigten Vorrichtung zur Fertigung von Membran-Elektroden-Anordnungen kann diese weiter eine UV-Aushärtungsstation aufweisen, die dazu eingerichtet ist, den Klebstoffauftrag mittels UV-Licht zumindest teilweise auszuhärten. In einer nicht gezeigten Variante zur gezeigten Vorrichtung zur Fertigung von Membran-Elektroden-Anordnungen kann diese weiter eine UV-Aushärtungsstation aufweisen, die dazu eingerichtet ist, den Klebstoffauftrag mittels UV-Licht zumindest teilweise auszuhärten.

Anschließend wird die MEA-Komponentenanordnung, die eine Anode/GDL 10, einen ersten Trägerrahmen 20a, eine Membran 30 und einen zweiten Trägerrahmen 20b umfasst, durch die dritte Transportvorrichtung 130 zu einer Laminationsvorrichtung 700 geführt. Die Laminationsvorrichtung 700 ist eine Walzenlaminationsvorrichtung, die die MEA-Komponenten aneinander anpresst.

Nachdem die Laminationsvorrichtung 700 die Anode/GDL 10, den ersten Trägerrahmen 20a, die Membran 30 und den zweiten Trägerrahmen 20b aneinander angepresst hat, wird eine fünfte MEA-Komponente, nämlich eine Katode/GDL 40, auf der MEA-Komponentenanordnung angeordnet.

Die Katode/GDL 40 wird zunächst als fortlaufendes Bahnmaterial bereitgestellt und anschließend durch eine zweite Schneidvorrichtung 820 mit einem Schneidzylinder in mehrere MEA-Komponentenabschnitte zerschnitten oder vereinzelt. Anschließend wird mit einer dritten Applikationsvorrichtung 320 ein Klebstoffauftrag auf die Katode/GDL 40 aufgebracht.

Die Katode/GDL 40 kann während des Zerschneidens/Zerteilens und während des Auftragens des Klebstoffauftrags durch eine vierte Transportvorrichtung (nicht gezeigt) gefördert werden. Eine kontinuierliche Förderung der Katode/GDL 40 durch die vierte Transportvorrichtung muss während des Auftragens des Klebstoffs durch die zweite Applikationsvorrichtung 320 nicht unterbrochen werden. Der Klebstoffauftrag kann insbesondere ein unter UV-Licht, Druck und/oder Wärme aushärtender Klebstoff sein. In einer nicht gezeigten Variante zur gezeigten Vorrichtung zur Fertigung von Membran-Elektroden-Anordnungen kann diese weiter eine UV-Aushärtungsstation aufweisen, die dazu eingerichtet ist, den Klebstoffauftrag mittels UV-Licht zumindest teilweise auszuhärten.

Weiter weist die Vorrichtung 4000 eine zusätzliche Anordnungsvorrichtung 480, welche in einer Variante ebenfalls eine korrespondierend zur Vakuumtrommel 400 ausgestaltete Vakuumtrommel sein kann, auf, die jeweils einen MEA-Komponentenabschnitt, nämlich einen vereinzelten Abschnitt der Katode/GDL 40, auf der durch das dritte Vakuumtransportband 130 geförderten MEA-Komponentenanordnung mit den Trägerrahmen 20a, 20b, der Membran 30 und der Anode/GDL 10 anordnet.

Die Abschnitte der Katode/GDL 40 werden so durch die zusätzliche Anordnungsvorrichtung 480 jeweils so auf einem der Trägerrahmen 20a, 20b angeordnet, dass die zumindest erste Ausnehmung 22 in einem der Trägerrahmen 20a, 20b auf einer der Anode/GDL 10 gegenüberliegenden oder abgewandten Seite der MEA-Komponentenanordnung jeweils verschlossen oder überdeckt wird.

Anschließend werden die MEA-Komponentenanordnungen, die nun jeweils eine Katode/GDL 40, einen ersten Trägerrahmen 20a, eine Membran 30, einen zweiten Trägerrahmen 20b und eine Anode/GDL 10 umfassen, mit der dritten Transportvorrichtung 130 zu einer weiteren Laminationsvorrichtung 710 geführt. Die weitere Laminationsvorrichtung 710 ist eine Walzenlaminationsvorrichtung, die die MEA-Komponenten aneinander anpresst.

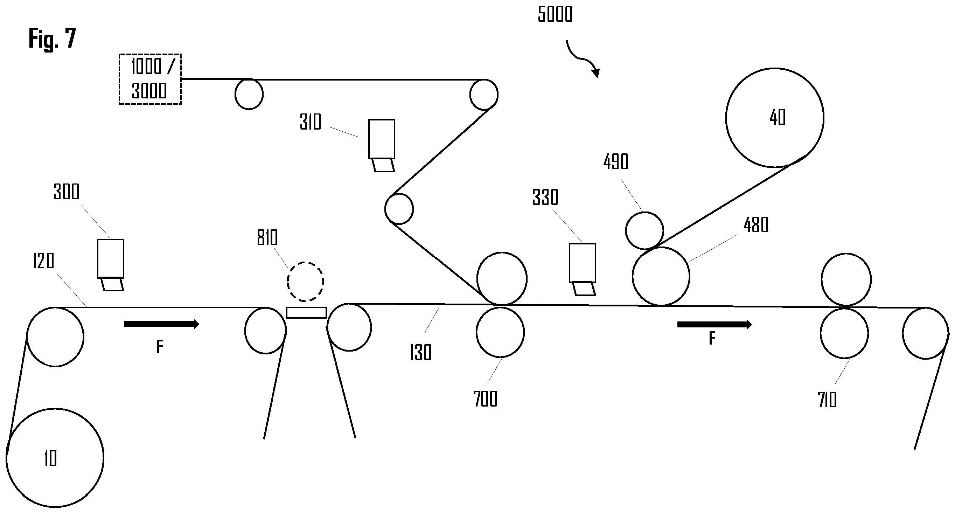

Die Fig. 7 zeigt eine alternative Weiterbildung 5000 der in den Fig. 3 und Fig. 5 gezeigten Vorrichtungen 1000, 3000 zur Herstellung einer Membran-Elektroden-Anordnung.

Im Unterschied zu der in der Fig. 6 gezeigten Weiterbildung 4000 wird die als Bahnmaterial bereitgestellte Katode/GDL 40 ohne vorheriges Zerschneiden der zusätzlichen Anordnungsvorrichtung 480, welche zum Beispiel eine korrespondierend zur Vakuumtrommel 400 ausgestaltete Vakuumtrommel sein kann, zugeführt und von dieser fixiert. Das Zerschneiden oder Zerteilen der als Bahnmaterial bereitgestellten Katode/GDL 40 erfolgt, während diese durch die zusätzliche Anordnungsvorrichtung 480 entlang einer Kreisbahn oder entlang eines Kreisbahnabschnitts gefördert wird, durch eine zusätzliche Schneidvorrichtung oder zusätzliche Rotationsstanze 490.

Weiter wird bei dem in der Fig. 7 gezeigten Beispiel kein Klebstoffauftrag auf die Katode/GDL 40 aufgetragen. Stattdessen umfasst die gezeigte Vorrichtung die vierte Applikationsvorrichtung 330, welche dazu eingerichtet ist, einen Klebstoffauftrag oder Klebstoffrahmen auf die von der dritten Transportvorrichtung 130 geförderten MEA-Komponentenanordnungen mit den Trägerrahmen 20a, 20b, der Membran 30 und der Anode/GDL 10 aufzubringen. Das Aufbringen des Klebstoffauftrags kann zum Beispiel derart geschehen, dass der Klebstoffauftrag die erste Ausnehmung 22 im ersten Trägerrahmen 20a und/oder im zweiten Trägerrahmen 20b rahmenartig umgibt oder umformt.

Die durch die zusätzliche Schneidvorrichtung oder zusätzliche Anordnungsvorrichtung 480 vereinzelten Komponentenabschnitte der Katode/GDL 40 werden anschließend von der zusätzlichen Anordnungsvorrichtung 480 auf den von der dritten Transportvorrichtung 130 geförderten MEA-Komponentenabschnitten mit den darauf befindlichen Klebstoffaufträgen angeordnet und der weiteren Laminationsvorrichtung 710 zugeführt.

Die vorangehend beschriebenen Varianten dienen lediglich dem besseren Verständnis der Struktur, der Funktionsweise und der Eigenschaften der hier offenbarten Gegenstände; sie schränken die Offenbarung nicht etwa auf die Ausführungsbeispiele ein. Die Fig. sind schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei können jede Funktionsweise, jedes Prinzip, jede technische Ausgestaltung und jedes Merkmal, welches/welche in den Fig. oder im Text offenbart ist/sind, mit allen Ansprüchen, jedem Merkmal im Text und in den anderen Figuren, anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Vorgehensweise zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

## Patentansprüche

1. Eine Vorrichtung (1000, 2000, 3000, 4000, 5000) zur Herstellung einer Membran-Elektroden-Anordnung, MEA, umfasst:
eine erste Transportvorrichtung (110) in Form eines ersten Vakuumtransportbands oder einer Vakuumtrommel, die dazu eingerichtet ist, zumindest einen ersten Trägerrahmen (20a) mit einer ersten Fördergeschwindigkeit zu fördern, und
eine erste Anordnungsvorrichtung (430) in Form einer Vakuumtrommel, die dazu eingerichtet ist, zumindest eine Membran (30) auf dem zumindest einen ersten Trägerrahmen (20a) anzuordnen, während dieser durch die erste Transportvorrichtung (110) gefördert wird, und
eine zweite Anordnungsvorrichtung (460) in Form einer Vakuumtrommel, die dazu eingerichtet ist, zumindest einen zweiten Trägerrahmen (20b) auf der Membran (30) anzuordnen, während diese gemeinsam mit dem ersten Trägerrahmen (20a) durch die erste Transportvorrichtung (110) gefördert wird.

2. Eine Vorrichtung (1000, 2000, 4000, 5000) nach dem Anspruch 1, wobei
die erste Transportvorrichtung (110) ein Vakuumtransportband ist und dazu eingerichtet ist, den ersten Trägerrahmen (20a) kontinuierlich mit einer ersten Fördergeschwindigkeit zu fördern, und/oder
das erste Vakuumtransportband dazu eingerichtet ist, den zumindest einen ersten Trägerrahmen (20a) gemeinsam mit einer ersten MEA-Komponente (10) zu fördern, wobei der zumindest erste Trägerrahmen (20a) auf der ersten MEA-Komponente (10) angeordnet ist.

3. Eine Vorrichtung (2000) nach dem Anspruch 2, weiter umfassend
eine dritte Anordnungsvorrichtung (400), insbesondere eine dritte Anordnungsvorrichtung in Form einer Vakuumtrommel, die dazu eingerichtet ist, den zumindest einen ersten Trägerrahmen (20a) auf der durch das erste Vakuumtransportband (110) geförderten MEA-Komponente (10) anzuordnen, sodass das erste Vakuumtransportband (110) den zumindest einen ersten Trägerrahmen (20a) gemeinsam mit einer ersten MEA-Komponente (10) fördert.

4. Eine Vorrichtung (3000, 4000, 5000) nach dem Anspruch 1, wobei
die erste Transportvorrichtung (110) eine Vakuumtrommel ist und dazu eingerichtet ist, den ersten Trägerrahmen (20a) kontinuierlich mit einer ersten Fördergeschwindigkeit zu fördern.

5. Eine Vorrichtung (3000, 4000, 5000) nach dem Anspruch 4, weiter umfassend
eine vierte Anordnungsvorrichtung (700) , insbesondere eine vierte Anordnungsvorrichtung in Form einer Vakuumtrommel, die dazu eingerichtet ist, den zumindest einen ersten Trägerrahmen (20a) gemeinsam mit der Membran (30) und gemeinsam mit dem zumindest einen zweiten Trägerrahmen (20b) auf einer ersten MEA-Komponente (10) anzuordnen.

6. Eine Vorrichtung (1000, 2000, 3000, 4000, 5000) nach einem der vorangegangenen Ansprüche 2, 3 oder 5, weiter umfassend
eine fünfte Anordnungsvorrichtung (480), insbesondere eine fünfte Anordnungsvorrichtung in Form einer Vakuumtrommel, die dazu eingerichtet ist, eine zweite MEA-Komponente (40) auf einer der ersten MEA-Komponente (10) abgewandten Oberfläche der Anordnung aus der ersten MEA-Komponente (10), dem zumindest einen ersten Trägerrahmen (20a), der Membran (30) und dem zumindest einen zweiten Trägerrahmen (20b) anzuordnen.

7. Eine Vorrichtung (1000, 2000, 3000, 4000, 5000) nach einem der vorangegangenen Ansprüche, weiter umfassend
eine erste und/oder eine zweite Stanzvorrichtung (420, 470), insbesondere eine erste und/oder eine zweite Rotationsstanze, wobei
die erste Stanzvorrichtung (420) dazu eingerichtet ist, eine oder mehrere Ausnehmungen (20, 24) in den zumindest einen ersten Trägerrahmen (20a) einzubringen, insbesondere während dieser durch eine Vakuumtrommel (400) oder durch die erste Transportvorrichtung (110) gefördert wird, und/oder
die zweite Stanzvorrichtung (470) dazu eingerichtet ist, eine oder mehrere Ausnehmungen (20, 24) in den zumindest einen zweiten Trägerrahmen (20b) einzubringen, insbesondere während dieser durch die zweite Anordnungsvorrichtung (460) gefördert wird.

8. Eine Vorrichtung (3000, 4000, 5000) nach einem der vorangegangenen Ansprüche 4, 5, 6 oder 7 weiter aufweisend
zumindest eine Bereitstellungsvorrichtung (400) für den zumindest einen ersten Trägerrahmen in Form einer Vakuumtrommel und/oder eine erste Rotationsstanze (420), die zu einem Zusammenwirken mit der Bereitstellungsvorrichtung (400) eingerichtet ist, und/oder
eine weitere Vakuumtrommel (450) und/oder eine zweite Rotationsstanze (470), die zu einem Zusammenwirken mit der zweiten Anordnungsvorrichtung (460) und/oder zu einem Zusammenwirken mit der weiteren Vakuumtrommel (450) eingerichtet ist, und/oder
einen gemeinsamen Rotationsantrieb, wobei der gemeinsame Rotationsantrieb dazu eingerichtet ist, die Vakuumtrommeln und/oder Rotationsstanzen gleichzeitig, insbesondere mit der jeweils gleichen Umfanggeschwindigkeit, zu rotieren.

9. Eine Vorrichtung (1000, 2000, 3000, 4000, 5000) nach einem der Ansprüche 2, 3, 5, 6, 7 oder 8 wobei
die erste MEA-Komponente eine Gasdiffusionsschicht (10), GDL, umfasst, insbesondere eine Anode oder eine Katode in Form einer GDL, und/oder
die zweite MEA-Komponente eine Gasdiffusionsschicht (20), GDL, umfasst, insbesondere eine Anode oder eine Katode in Form einer GDL, und/oder
die Membran eine katalysatorbeschichtete Membran (30), CCM, ist.

10. Eine Vorrichtung (4000, 5000) nach einem der vorangegangenen Ansprüche, weiter umfassend
eine zweite Transportvorrichtung (120), welche insbesondere ein Vakuumtransportband ist, wobei
die zweite Transportvorrichtung (120) dazu angeordnet und ausgebildet ist, die erste MEA-Komponente (10) mit einer zweiten Fördergeschwindigkeit zu fördern, und/oder
die zweite Transportvorrichtung (120) dazu angeordnet und ausgebildet ist, die erste MEA-Komponente (10) kontinuierlich oder taktweise mit der zweiten Fördergeschwindigkeit zu fördern, und/oder
die zweite Transportvorrichtung (120) dazu eingerichtet ist, eine erste MEA-Komponente (10) in Form eines Bahnmaterials oder in Form mehrerer MEA-Komponentenabschnitte der ersten MEA-Komponente (10) zu fördern.

11. Eine Vorrichtung (4000, 5000) nach dem vorangegangenen Anspruch, weiter umfassend
eine Übergabevorrichtung, die dazu eingerichtet ist, MEA-Komponentenabschnitte von der zweiten Transportvorrichtung (120) auf die erste Transportvorrichtung (130) oder auf eine dritte Transportvorrichtung zu bewegen.

12. Eine Vorrichtung (1000, 2000, 3000, 4000, 5000) nach einem der vorangegangenen Ansprüche, weiter umfassend
eine erste Bereitstellungsvorrichtung, insbesondere in Form einer Trägerbahnrolle, die dazu eingerichtet ist, den zumindest einen ersten Trägerrahmen (20a) gemeinsam mit einer ersten Trägerschicht (20c) bereitzustellen, und/oder
eine zweite Bereitstellungsvorrichtung, insbesondere in Form einer Trägerbahnrolle, die dazu eingerichtet ist, den zumindest einen zweiten Trägerrahmen (20b) gemeinsam mit einer zweiten Trägerschicht (20d) bereitzustellen, und/oder
eine erste Trägerschichtaufnahmevorrichtung, insbesondere in Form einer Trägerschichtrolle, die dazu eingerichtet ist, die erste Trägerschicht (20c) aufzunehmen nachdem zumindest ein Teil des zumindest einen ersten Trägerrahmens (20a) von ihr abgelöst wurde, und/oder
eine zweite Trägerschichtaufnahmevorrichtung, insbesondere in Form einer Trägerschichtrolle, die dazu eingerichtet ist, die zweite Trägerschicht (20b) aufzunehmen nachdem zumindest ein Teil des zumindest einen zweiten Trägerrahmens (20d) von ihr abgelöst wurde;
wobei insbesondere
der von der ersten Bereitstellungsvorrichtung bereitgestellte zumindest eine erste Trägerrahmen (20a) mit einem, insbesondere vollflächigen und/oder wärmelöslichen, Klebstoffauftrag auf der ersten Trägerschicht (20d) fixiert ist, und/oder
der von der zweiten Bereitstellungsvorrichtung bereitgestellte zumindest eine zweite Trägerrahmen (20c) mit einem, insbesondere vollflächigen und/oder wärmelöslichen, Klebstoffauftrag auf der zweiten Trägerschicht (20d) fixiert ist.

13. Ein Verfahren zur Herstellung einer Membran-Elektroden-Anordnung, MEA, umfasst zumindest die Schritte:
- Fördern, mit einer ersten Transportvorrichtung (110) in Form eines ersten Vakuumtransportbands oder einer Vakuumtrommel, zumindest eines ersten Trägerrahmens (20a) mit einer ersten Fördergeschwindigkeit; und
- Anordnen, mit einer ersten Anordnungsvorrichtung (430) in Form einer Vakuumtrommel, zumindest einer Membran (30) auf dem zumindest einen Trägerrahmen (20a), während dieser durch die erste Transportvorrichtung (110) gefördert wird; und
- Anordnen, mit einer zweiten Anordnungsvorrichtung (460) in Form einer Vakuumtrommel, zumindest eines zweiten Trägerrahmens (20b) auf der Membran (30), während diese gemeinsam mit dem ersten Trägerrahmen (20) durch die erste Transportvorrichtung (110) gefördert wird.

14. Ein Verfahren nach dem vorangegangenen Anspruch, wobei
der zumindest eine erste Trägerrahmen (20a) gemeinsam mit einer ersten Trägerschicht (20c) bereitgestellt wird, wobei der zumindest eine erste Trägerrahmen (20a) mit einem, insbesondere vollflächigen und/oder wärmelöslichen, Klebstoffauftrag auf der ersten Trägerschicht (20c) fixiert ist, und/oder
der zumindest eine zweite Trägerrahmen (20b) gemeinsam mit einer zweiten Trägerschicht (20d) bereitgestellt wird, wobei der zumindest eine zweite Trägerrahmen (20d) mit einem, insbesondere vollflächigen und/oder wärmelöslichen, Klebstoffauftrag auf der zweiten Trägerschicht (20a) fixiert ist, und/oder
zumindest eine erste Ausnehmung (22) in den ersten Trägerrahmen (20a) eingebracht wird, während dieser auf der ersten Trägerschicht (20c) fixiert ist, und/oder
zumindest eine erste Ausnehmung (22) in den zweiten Trägerrahmen (20b) eingebracht wird, während dieser auf der zweiten Trägerschicht (20d) fixiert ist.

15. Ein Verfahren nach dem vorangegangenen Anspruch, weiter umfassend zumindest einen der Schritte:
- Lösen des zumindest einen ersten Trägerrahmens (20a) von der ersten Trägerschicht (20c);
- Lösen des zumindest einen zweiten Trägerrahmens (20b) von der zweiten Trägerschicht (20d);
- Erwärmen des ersten und/oder des zweiten Trägerrahmens (20a, 20b) und eines auf dem ersten und/oder zweiten Trägerrahmen (20a, 20b) angeordneten vollflächigen und/oder wärmelöslichen Klebstoffauftrags;
- Anordnen einer ersten MEA-Komponente (10), insbesondere einer Gasdiffusionsschicht, GDL, auf dem ersten oder dem zweiten Trägerrahmen (20a, 20b) und/oder Anordnen einer zweiten MEA-Komponente (40), insbesondere einer GDL, auf dem ersten oder dem zweiten Trägerrahmen (20a, 20b);
- Einbringen von weiteren Ausnehmungen (24) in den ersten Trägerrahmen und/oder in den zweiten Trägerrahmen (20a, 20b), insbesondere mit einer Rotationsstanze (420, 470), wobei die weiteren Ausnehmungen (24) insbesondere benachbart zu einer oder benachbart zu mehreren Außenkanten der ersten Ausnehmung (22) angeordnet werden.

## Claims

1. An apparatus (1000, 2000, 3000, 4000, 5000) for manufacturing a membrane electrode assembly, MEA, comprises:
a first transport apparatus (110) in the form of a first vacuum conveyor belt or a vacuum drum, which is set up to convey at least a first carrier frame (20a) at a first conveying speed, and
a first arranging apparatus (430) in the form of a vacuum drum which is set up to arrange at least one membrane (30) on the at least one first carrier frame (20a) while the latter is being conveyed by the first transport apparatus (110), and
a second arranging apparatus (460) in the form of a vacuum drum, which is set up to arrange at least one second carrier frame (20b) on the membrane (30) while the latter is conveyed together with the first carrier frame (20a) by the first transport apparatus (110).

2. An apparatus (1000, 2000, 4000, 5000) according to claim 1, wherein
the first transport apparatus (110) is a vacuum conveyor belt and is set up to convey the first carrier frame (20a) continuously at a first conveying speed, and/or
the first vacuum conveyor belt is set up to convey the at least one first carrier frame (20a) together with a first MEA component (10), wherein the at least first carrier frame (20a) is set up on the first MEA component (10).

3. An apparatus (2000) according to claim 2, further comprising
a third arranging apparatus (400), in particular a third arranging apparatus in the form of a vacuum drum, which is set up to arrange the at least one first carrier frame (20a) on the MEA component (10) conveyed by the first vacuum conveyor belt (110), so that the first vacuum conveyor belt (110) conveys the at least one first carrier frame (20a) together with a first MEA component (10).

4. An apparatus (3000, 4000, 5000) according to claim 1, wherein
the first transport apparatus (110) is a vacuum drum and is set up to convey the first carrier frame (20a) continuously at a first conveying speed.

5. An apparatus (3000, 4000, 5000) according to claim 4, further comprising
a fourth arranging apparatus (700), in particular a fourth arranging apparatus in the form of a vacuum drum, which is set up to arrange the at least one first carrier frame (20a) together with the membrane (30) and together with the at least one second carrier frame (20b) on a first MEA component (10).

6. An apparatus (1000, 2000, 3000, 4000, 5000) according to any of the preceding claims 2, 3 or 5, further comprising
a fifth arranging apparatus (480), in particular a fifth arranging apparatus in the form of a vacuum drum, which is set up to arrange a second MEA component (40) on a surface of the arrangement comprising the first MEA component (10), the at least one first support frame (20a), the membrane (30) and the at least one second support frame (20b) facing away from the first MEA component (10).

7. An apparatus (1000, 2000, 3000, 4000, 5000) according to any one of the preceding claims, further comprising
a first and/or a second punching apparatus (420, 470), in particular a first and/or a second rotary punch, wherein
the first punching apparatus (420) is set up to make one or more recesses (20, 24) in the at least one first carrier frame (20a), in particular while the latter is being conveyed by a vacuum drum (400) or by the first transport apparatus (110), and/or
the second punching apparatus (470) is set up to make one or more recesses (20, 24) in the at least one second carrier frame (20b), in particular while the latter is being conveyed by the second arranging apparatus (460).

8. An apparatus (3000, 4000, 5000) according to any of the preceding claims 4, 5, 6 or 7 further comprising
at least one supply apparatus (400) for the at least one first carrier frame in the form of a vacuum drum and/or a first rotary punching press (420) which is set up to co-operate with the supply apparatus (400), and/or
a further vacuum drum (450) and/or a second rotary punching press (470), which is set up to co-operate with the second arranging apparatus (460) and/or to co-operate with the further vacuum drum (450), and/or
a common rotation drive, wherein the common rotation drive is set up to rotate the vacuum drums and/or rotary punching presses simultaneously, in particular at the same circumferential speed in each case.

9. An apparatus (1000, 2000, 3000, 4000, 5000) according to any one of claims 2, 3, 5, 6, 7 or 8 wherein
the first MEA component comprises a gas diffusion layer (10), GDL, in particular an anode or a cathode in the form of a GDL, and/or
the second MEA component comprises a gas diffusion layer (20), GDL, in particular an anode or a cathode in the form of a GDL, and/or
the membrane is a catalyst-coated membrane (30), CCM.

10. An apparatus (4000, 5000) according to any one of the preceding claims, further comprising
a second transport apparatus (120), which is in particular a vacuum conveyor belt, wherein
the second transport apparatus (120) is set up and designed to convey the first MEA component (10) at a second conveying speed, and/or
the second transport apparatus (120) is set up and designed to convey the first MEA component (10) continuously or cyclically at the second conveying speed, and/or
the second transport apparatus (120) is set up to convey a first MEA component (10) in the form of a web material or in the form of a plurality of MEA component sections of the first MEA component (10).

11. An apparatus (4000, 5000) according to the preceding claim, further comprising
a transfer apparatus which is set up to move MEA component sections from the second transport apparatus (120) to the first transport apparatus (130) or to a third transport apparatus.

12. An apparatus (1000, 2000, 3000, 4000, 5000) according to any one of the preceding claims, further comprising
a first provision apparatus, in particular in the form of a carrier web roller, which is set up to provide the at least one first carrier frame (20a) together with a first carrier layer (20c), and/or
a second provisioning apparatus, in particular in the form of a carrier web roller, which is set up to provide the at least one second carrier frame (20b) together with a second carrier layer (20d), and/or
a first carrier layer receiving apparatus, in particular in the form of a carrier layer roller, which is set up to receive the first carrier layer (20c) after at least a part of the at least one first carrier frame (20a) has been detached therefrom, and/or
a second carrier layer receiving apparatus, in particular in the form of a carrier layer roller, which is set up to receive the second carrier layer (20b) after at least a part of the at least one second carrier frame (20d) has been detached from it; wherein in particular
the at least one first carrier frame (20a) provided by the first supply apparatus is fixed to the first carrier layer (20d) with an adhesive application, in particular over the entire surface and/or heat-soluble adhesive application, and/or
the at least one second carrier frame (20c) provided by the second provision apparatus is fixed to the second carrier layer (20d) with an adhesive application, in particular a full-surface and/or heat-soluble adhesive application.

13. A method of manufacturing a membrane electrode assembly, MEA, comprises at least the steps of:
- conveying, with a first transport apparatus (110) in the form of a first vacuum conveyor belt or a vacuum drum, at least a first carrier frame (20a) with a first conveying speed; and
- arranging, with a first arranging apparatus (430) in the form of a vacuum drum, at least one membrane (30) on the at least one carrier frame (20a) while it is being conveyed by the first transport apparatus (110); and
- arranging, with a second arranging apparatus (460) in the form of a vacuum drum, of at least a second carrier frame (20b) on the membrane (30), while the latter is conveyed together with the first carrier frame (20) by the first transport apparatus (110).

14. A method according to the preceding claim, wherein
the at least one first carrier frame (20a) is provided together with a first carrier layer (20c), wherein the at least one first carrier frame (20a) is fixed to the first carrier layer (20c) with an adhesive application, in particular a full-surface and/or heat-soluble adhesive application, and/or
the at least one second carrier frame (20b) is provided together with a second carrier layer (20d), the at least one second carrier frame (20d) being fixed to the second carrier layer (20a) with an adhesive application, in particular over the entire surface and/or heat-soluble adhesive application, and/or
at least one first recess (22) is made in the first carrier frame (20a) while the latter is fixed on the first carrier layer (20c), and/or
at least one first recess (22) is made in the second carrier frame (20b) while the latter is fixed on the second carrier layer (20d).

15. A method according to the preceding claim, further comprising at least one of the steps of:
- detaching the at least one first carrier frame (20a) from the first carrier layer (20c);
- detaching the at least one second carrier frame (20b) from the second carrier layer (20d);
- heating the first and/or the second carrier frame (20a, 20b) and a full-surface and/or heat-soluble adhesive application set up on the first and/or second carrier frame (20a, 20b);
- arranging a first MEA component (10), in particular a gas diffusion layer, GDL, on the first or the second carrier frame (20a, 20b) and/or arranging a second MEA component (40), in particular a GDL, on the first or the second carrier frame (20a, 20b);
- introducing of further recesses (24) into the first carrier frame and/or into the second carrier frame (20a, 20b), in particular with a rotary punching press (420, 470), the further recesses (24) being set up in particular adjacent to one or more outer edges of the first recess (22).

## Revendications

1. Un dispositif (1000, 2000, 3000, 4000, 5000) pour la fabrication d'un assemblage membrane-électrode, MEA, comprenant:
un premier dispositif de transport (110) sous la forme d'une première bande transporteuse sous vide ou d'un tambour sous vide, qui est conçu pour transporter au moins un premier cadre de support (20a) à une première vitesse de transport, et
un premier dispositif d'agencement (430) sous la forme d'un tambour à vide, qui est conçu pour agencer au moins une membrane (30) sur au moins un premier cadre de support (20a) pendant que celui-ci est transporté par le premier dispositif de transport (110), et
un deuxième dispositif de disposition (460) sous la forme d'un tambour à vide, qui est conçu pour disposer au moins un deuxième cadre de support (20b) sur la membrane (30) pendant que celle-ci est transportée avec le premier cadre de support (20a) par le premier dispositif de transport (110).

2. Le dispositif (1000, 2000, 4000, 5000) selon la revendication 1, dans lequel
le premier dispositif de transport (110) est un convoyeur à bande sous vide et est conçu pour transporter le premier cadre de support (20a) en continu à une première vitesse de transport, et/ou
le premier convoyeur à vide est conçu pour transporter au moins un premier châssis de support (20a) conjointement avec un premier composant MEA (10), le au moins un premier châssis de support (20a) étant disposé sur le premier composant MEA (10).

3. Le dispositif (2000) selon la revendication 2, comprenant en outre
un troisième dispositif de disposition (400), en particulier un troisième dispositif de disposition sous la forme d'un tambour à vide, qui est conçu pour disposer le au moins un premier cadre de support (20a) sur le composant MEA (10) transporté par la première bande transporteuse sous vide (110), de sorte que la première bande transporteuse sous vide (110) transporte le au moins un premier cadre de support (20a) conjointement avec un premier composant MEA (10).

4. Le dispositif (3000, 4000, 5000) selon la revendication 1, dans lequel
le premier dispositif de transport (110) est un tambour à vide et est conçu pour transporter le premier châssis de support (20a) en continu à une première vitesse de transport.

5. Le dispositif (3000, 4000, 5000) selon la revendication 4, comprenant en outre
un quatrième dispositif de disposition (700) , en particulier un quatrième dispositif de disposition sous la forme d'un tambour à vide, qui est conçu pour disposer au moins un premier cadre de support (20a) conjointement avec la membrane (30) et conjointement avec au moins un deuxième cadre de support (20b) sur un premier composant MEA (10).

6. Le dispositif (1000, 2000, 3000, 4000, 5000) selon l'une des revendications 2, 3 ou 5 précédentes, comprenant en outre
un cinquième dispositif d'agencement (480), en particulier un cinquième dispositif d'agencement sous la forme d'un tambour à vide, qui est conçu pour disposer un deuxième composant MEA (40) sur une surface de l'agencement opposée au premier composant MEA (10), à partir du premier composant MEA (10), du au moins un premier cadre de support (20a), la membrane (30) et le au moins un deuxième cadre de support (20b).

7. Le dispositif (1000, 2000, 3000, 4000, 5000) selon l'une des revendications précédentes, comprenant en outre
un premier et/ou un deuxième dispositif de poinçonnage (420, 470), en particulier une première et/ou une deuxième poinçonneuse rotative, dans lequel
le premier dispositif de poinçonnage (420) est conçu pour réaliser une ou plusieurs découpes (20, 24) dans au moins un premier cadre de support (20a), en particulier pendant que celui-ci est transporté par un tambour à vide (400) ou par le premier dispositif de transport (110), et/ou
le deuxième dispositif de poinçonnage (470) est conçu pour réaliser un ou plusieurs évidements (20, 24) dans le au moins un deuxième cadre de support (20b), en particulier pendant que celui-ci est transporté par le deuxième dispositif d'agencement (460).

8. Le dispositif (3000, 4000, 5000) selon l'une des revendications précédentes 4, 5, 6 ou 7, comprenant en outre
au moins un dispositif de mise à disposition (400) pour le au moins un premier cadre de support sous la forme d'un tambour à vide et/ou une première poinçonneuse rotative (420) qui est conçue pour coopérer avec le dispositif de mise à disposition (400), et/ou
un autre tambour à vide (450) et/ou une deuxième poinçonneuse rotative (470) qui est conçue pour coopérer avec le deuxième dispositif de disposition (460) et/ou pour coopérer avec l'autre tambour à vide (450), et/ou
un entraînement rotatif commun, l'entraînement rotatif commun étant conçu pour faire tourner les tambours à vide et/ou les poinçons rotatifs simultanément, en particulier à la même vitesse périphérique.

9. Le dispositif (1000, 2000, 3000, 4000, 5000) selon l'une des revendications 2, 3, 5, 6, 7 ou 8, dans lequel
le premier composant MEA comprend une couche de diffusion de gaz (10), GDL, en particulier une anode ou une cathode sous la forme d'un GDL, et/ou
le deuxième composant MEA comprend une couche de diffusion de gaz (20), GDL, en particulier une anode ou une cathode sous forme d'un GDL, et/ou
la membrane est une membrane revêtue d'un catalyseur (30), CCM.

10. Le dispositif (4000, 5000) selon l'une des revendications précédentes, comprenant en outre
un deuxième dispositif de transport (120), qui est en particulier un convoyeur à bande sous vide,
le deuxième dispositif de transport (120) est agencé et conçu pour transporter le premier composant MEA (10) à une deuxième vitesse de transport, et/ou
le deuxième dispositif de transport (120) est agencé et conçu pour transporter le premier composant MEA (10) de manière continue ou par cycles à la deuxième vitesse de transport, et/ou
le deuxième dispositif de transport (120) est conçu pour transporter un premier composant MEA (10) sous la forme d'un matériau en bande ou sous la forme de plusieurs sections de composant MEA du premier composant MEA (10).

11. Le dispositif (4000, 5000) selon la revendication précédente, comprenant en outre
un dispositif de transfert qui est conçu pour déplacer des sections de composant MEA du deuxième dispositif de transport (120) vers le premier dispositif de transport (130) ou vers un troisième dispositif de transport.

12. Le dispositif (1000, 2000, 3000, 4000, 5000) selon l'une des revendications précédentes, comprenant en outre
un premier dispositif de mise à disposition, notamment sous la forme d'un rouleau de bande de support, qui est conçu pour mettre à disposition au moins un premier cadre de support (20a) conjointement avec une première couche de support (20c), et/ou
un deuxième dispositif de mise à disposition, notamment sous la forme d'un rouleau de bande support, qui est conçu pour mettre à disposition au moins un deuxième cadre support (20b) conjointement avec une deuxième couche support (20d), et/ou
un premier dispositif de réception de couche de support, notamment sous la forme d'un rouleau de couche de support, qui est conçu pour recevoir la première couche de support (20c) après qu'au moins une partie du au moins un premier cadre de support (20a) en a été détachée, et/ou
un deuxième dispositif de réception de couche de support, en particulier sous la forme d'un rouleau de couche de support, qui est conçu pour recevoir la deuxième couche de support (20b) après qu'au moins une partie du au moins un deuxième cadre de support (20d) en ait été détachée ;
en particulier
le au moins un premier cadre de support (20a) fourni par le premier dispositif de mise à disposition est fixé à la première couche de support (20d) à l'aide d'une couche d'adhésif, en particulier sur toute la surface et/ou thermosensible, et/ou
au moins un deuxième cadre de support (20c) fourni par le deuxième dispositif de mise à disposition est fixé sur la deuxième couche de support (20d) à l'aide d'une couche d'adhésif, en particulier sur toute la surface et/ou thermofusible.

13. Une méthode de fabrication d'un assemblage membrane-électrode, MEA, comprend au moins les étapes suivantes:
- transporter, à l'aide d'un premier dispositif de transport (110) sous la forme d'une première bande transporteuse à vide ou d'un tambour à vide, au moins un premier cadre de support (20a) à une première vitesse de transport; et
- disposer, à l'aide d'un premier dispositif de disposition (430) sous la forme d'un tambour à vide, au moins une membrane (30) sur au moins un cadre de support (20a) pendant que celui-ci est transporté par le premier dispositif de transport (110); et
- disposer, à l'aide d'un deuxième dispositif de disposition (460) sous la forme d'un tambour à vide, au moins un deuxième cadre de support (20b) sur la membrane (30) pendant que celle-ci est transportée avec le premier cadre de support (20) par le premier dispositif de transport (110).

14. La méthode selon la revendication précédente, dans laquelle
le au moins un premier cadre de support (20a) est fourni conjointement avec une première couche de support (20c), le au moins un premier cadre de support (20a) étant fixé à la première couche de support (20c) à l'aide d'une couche d'adhésif, en particulier sur toute la surface et/ou thermosensible, et/ou
au moins un deuxième cadre de support (20b) est fourni conjointement avec une deuxième couche de support (20d), le au moins un deuxième cadre de support (20d) étant fixé à la deuxième couche de support (20a) à l'aide d'une couche d'adhésif, en particulier sur toute la surface et/ou thermosensible, et/ou
au moins un premier évidement (22) est réalisé dans le premier cadre de support (20a) alors que celui-ci est fixé sur la première couche de support (20c), et/ou
au moins un premier évidement (22) est réalisé dans le deuxième cadre de support (20b) alors que celui-ci est fixé sur la deuxième couche de support (20d).

15. La méthode selon la revendication précédente, comprenant en outre au moins l'une des étapes suivantes:
- détacher les au moins un premier cadre de support (20a) de ladite première couche de support (20c);
- détacher au moins un deuxième cadre de support (20b) de la deuxième couche de support (20d);
- chauffer le premier et/ou la deuxième cadre de support (20a, 20b) et d'une couche d'adhésif thermosensible et/ou couvrant toute la surface, disposée sur le premier et/ou le deuxième cadre de support (20a, 20b);
- disposer un premier composant MEA (10), en particulier d'une couche de diffusion de gaz, GDL, sur le premier ou le deuxième cadre de support (20a, 20b) et/ou disposition d'un deuxième composant MEA (40), en particulier d'un GDL, sur le premier ou le deuxième cadre de support (20a, 20b);
- réaliser autres évidements (24) dans le premier cadre support et/ou dans le deuxième cadre support (20a, 20b), en particulier à l'aide d'une poinçonneuse rotative (420, 470), les autres évidements (24) étant disposés en particulier à proximité d'un ou de plusieurs bords extérieurs du premier évidement (22).
